# FASCICULE DE BREVET EUROPEEN

(11) **EP 3 622 688 B1**
(45) Date de publication et mention de la délivrance du brevet: **28.06.2023**
(21) Numéro de dépôt: 18728213.2
(22) Date de dépôt: 03.05.2018
(51) Int. Cl.: H04W 12/00, H04W 48/16, H04W 88/00, H04L 9/08

(54) **SINGULARISATION DE TRAMES À ÉMETTRE PAR UN OBJET CONNECTÉ ET BLOCAGE DE TRAMES RÉÉMISES SUR UN RÉSEAU DE COMMUNICATION SANS-FIL BASSE CONSOMMATION**
SINGULARISIERUNG VON RAHMEN, DIE DURCH EIN VERBUNDENES OBJEKT AUSGESTRAHLT WERDEN SOLLEN, UND BLOCKIERUNG VON BESCHAFFENEN RAHMENEN AUF EINEM GERINGEN VERBRAUCHSDRAHTLOSEN KOMMUNIKATIONSNETZWERK
SINGULARIZATION OF FRAMES TO BE EMITTED BY A CONNECTED OBJECT AND BLOCKING OF RETRANSMITTED FRAMES ON A LOW CONSUMPTION WIRELESS COMMUNICATION NETWORK

(30) Priorité: 11.05.2017 FR 1754145
(43) Date de publication de la demande: 18.03.2020
(73) Titulaire: Orange, 92130 Issy-les-Moulineaux (FR)
(72) Inventeur: BENDIABDALLAH, Halim, 92326 Châtillon cedex (FR); SOUMOY, Isabelle, 92326 Châtillon cedex (FR)
(86) Numéro de dépôt international: PCT/FR2018/051098
(87) Numéro de publication internationale: WO 2018/206880

(56) Documents cités:
- WO-A1-2009/007612
- WO-A2-2004/051956
- DRAGOMIR DAN ET AL: "A Survey on Secure Communication Protocols for IoT Systems", 2016 INTERNATIONAL WORKSHOP ON SECURE INTERNET OF THINGS (SIOT), IEEE, 26 septembre 2016 (2016-09-26), pages 47-62, XP033089808, DOI: 10.1109/SIOT.2016.012

## Description

L'invention concerne la singularisation de trames à émettre par un objet connecté et le blocage des trames réémises sur un réseau de communication sans-fil basse consommation. En particulier, l'invention s'applique au réseau de communication sans-fil basse consommation dans lequel les objets connectés utilisent la technologie LoRa (marque déposée), c'est à dire un réseau étendu (en anglais Long Range).

Le domaine des objets connectés est en pleine expansion. De multiples objets connectés investissent notre quotidien : nos maisons (domotique : thermostat, ouverture, etc., surveillance : station météo, détecteur, etc.), notre personne (montre, pèse-personne, etc.), notre environnement... Les opérateurs de réseaux de télécommunication proposent un réseau de communication dédié à ces objets connectés : un réseau de communication sans-fil basse consommation en raison des capacités limitées des objets connectés. Parmi les réseaux de communication sans-fil basse consommation existants sont proposés les réseaux SigFox (marque déposée), LoRaWan (marque déposée), etc. via lesquels les informations sont réceptionnées en provenance des objets connectés pour être ensuite véhiculées à travers le réseau Internet.

Un exemple se trouve dans WO 2004/051956. Pour cela, des antennes capables de démoduler le signal du réseau sans-fil, notamment le signal radio LoRa, en un signal conforme à un protocole du réseau Internet, tel que le protocole TCP/IP, sont installées. Ces antennes sont couplées à une passerelle, aussi nommée Gateway en anglais, qui décode les trames reçues via le réseau de communication sans fil basse consommation pour les envoyer vers un serveur réseau, ou Network Server en anglais, selon un protocole Internet tel que TCP ou UDP. Le serveur réseau est capable de déterminer, voire de vérifier, parmi les trames reçues celles provenant d'objets connectés associés au serveur réseau. Ainsi, le serveur réseau ne traitera pas les trames émises par des objets connectés qui ne lui sont pas associés. Cela permet de réduire la charge de traitement du serveur réseau. Néanmoins, le serveur réseau peut toujours être surchargé par des trames émises par des objets qui lui sont associés : notamment, par réémission de trames émises. La réémission des trames émises par un objet connecté associé à un serveur réseau surchargera non seulement le serveur réseau mais pourra également fausser le traitement effectué par le serveur réseau sur les données utiles provenant des objets connectés associés. Les données traitées par le serveur réseau seront ainsi polluées. Les risques peuvent être importants suivants le type d'objets connectés pour lequel les données sont polluées. Par exemple, la pollution des données de relevés d'un compteur électrique peut engendrer une surfacturation ou sous facturation d'un ou plusieurs clients, la pollution de données de santé peut engendrer au moins une surcharge de consultation médicale au pire la mise en place d'un traitement inapproprié, etc.

Un des buts de la présente invention est de remédier à des inconvénients par rapport à l'état de la technique. Un objet de l'invention est un procédé de singularisation des trames à émettre par un objet connecté à un serveur via un réseau de communication sans fil basse consommation, le procédé de singularisation comporte une intégration, dans une trame à émettre identifiant l'objet connecté émetteur et comportant des données utiles, d'au moins :
- un compteur apte à être incrémenté en fonction de la trame à émettre, le compteur ayant une dimension prédéfinie ; et
- un indice supplémentaire modifiable lors d'une mise à zéro du compteur.

Ainsi, deux trames provenant d'un même objet avec les mêmes données utiles seront uniques car elles comporteront au moins un compteur et/ou un indice supplémentaire distinct(s). L'utilisation de l'indice supplémentaire permet, sans réduire la durée de vie de l'objet connecté, de singulariser un plus grand nombre de trames qu'en utilisant seulement le compteur généralement intégré aux trames émises par les objets connectés permettant actuellement au serveur réseau de vérifier si une trame n'a pas été perdue. En effet, ce compteur est généralement codé sur un petit nombre d'octets : 2 octets soit 16 bits pour la norme LoRa engendrant un retour à zéro rapide du compteur (cycle complet en 65536 trames émises soit environ en 6 mois pour un objet émettant une trame toutes les 5 minutes). Ainsi, si une solution de singularisation était basée uniquement sur ce compteur seul, cela engendrerait une durée de vie de l'objet connecté calée sur un cycle du compteur soit dans notre exemple : 6 mois.

Avantageusement, la première valeur de l'indice supplémentaire dans la première trame à émettre par l'objet après la connexion de l'objet avec un serveur est une valeur parmi les suivantes :
- une valeur résultant d'une fonction aléatoire ;
- une valeur résultant d'une fonction aléatoire reçue par l'objet en provenance du serveur en réponse à une demande de connexion de l'objet au serveur.
- une valeur d'un paramètre de génération d'au moins une clé de cryptage des données utiles à transmettre résultant d'une fonction aléatoire et reçue par l'objet en provenance du serveur.

Ainsi, un utilisateur malveillant réémettant des trames et détectant l'indice supplémentaire aura des difficultés à déterminer et reproduire la fonction de l'indice supplémentaire. Si la fonction aléatoire est mise en oeuvre par le serveur en réponse à une demande de connexion de l'objet au serveur, l'objet connecté n'a pas à mettre en oeuvre une opération trop gourmande en coût de calcul. Si la première valeur de l'indice correspond à celle d'un paramètre de génération d'une clé de cryptage, la transmission de la valeur aléatoire servant d'indice supplémentaire ne vient pas surcharger les échanges du serveur avec l'objet connecté.

Avantageusement, l'indice supplémentaire résulte d'une fonction monotone. Ainsi, la détection de réémission de trame coté serveur sera facilitée par une simple comparaison de la valeur de l'indice supplémentaire de la trame reçue avec celui de la trame précédente en fonction de l'ordre de la fonction monotone.

Avantageusement, le procédé de singularisation comporte une modification de l'indice supplémentaire déclenchée par une mise à zéro du compteur : la valeur de l'indice supplémentaire est égale à une valeur prise aléatoirement entre une valeur précédente de l'indice supplémentaire et la valeur borne de l'indice supplémentaire. Ainsi, un utilisateur malveillant réémettant des trames et détectant l'indice supplémentaire aura des difficultés à déterminer et reproduire la modification de l'indice supplémentaire.

Avantageusement, le procédé de singularisation déclenche une nouvelle requête de connexion de l'objet connecté à destination du serveur lorsque l'indice supplémentaire atteint la valeur borne. Ainsi, même si le cycle d'utilisation de l'indice supplémentaire complété par le cycle du compteur à chaque valeur de l'indice supplémentaire est terminé, la singularisation des trames ne viendra pas mettre un terme à la vie de l'objet connecté mais seulement de la connexion en cours. En effet, en déclenchant une nouvelle connexion entre l'objet connecté et le serveur, au moins une nouvelle clé sera générée pour cette nouvelle connexion et le serveur même s'il ne détecte pas la réémission ne traitera pas les trames car il sera capable de déterminer que les trames réémises ne proviennent pas de la nouvelle connexion (puisqu'elles proviennent de l'ancienne connexion qui n'est plus valide).

Un objet de l'invention est aussi un procédé de génération de trames à émettre uniques par un objet connecté à serveur via un réseau de communication sans fil basse consommation, le procédé de génération comporte :
- une distribution des données utiles en trames à émettre identifiant l'objet connecté émetteur, et
- une intégration dans une trame à émettre d'au moins :
   - un compteur apte à être incrémenté en fonction de la trame à émettre, le compteur ayant une dimension prédéfinie ; et
   - un indice supplémentaire modifiable lors d'une mise à zéro du compteur.

Ainsi, deux trames provenant d'un même objet avec les mêmes données utiles seront uniques car elles comporteront au moins un compteur et/ou un indice supplémentaire distinct(s). L'utilisation de l'indice supplémentaire permet, sans réduire la durée de vie de l'objet connecté, de singulariser un plus grand nombre de trames qu'en utilisant seulement le compteur généralement intégré aux trames émises par les objets connectés permettant actuellement au serveur réseau de vérifier si une trame n'a pas été perdue.

Avantageusement, le compteur est intégré dans un en-tête de trame. Ainsi, le compteur ne nécessite pas d'ajouter de données supplémentaires dans la trame à émettre en utilisant le compteur déjà existant dans l'en-tête de trame et servant aussi à vérifier si des trames ont été perdues lors de la transmission. Le compteur sera donc utilisé pour deux fonctions distinctes côté serveur : vérification perte de trame, vérification répétition de trame.

Avantageusement, l'indice supplémentaire est intégré dans un des éléments suivants de la trame :
- un en-tête de trame ;
- une partie utile de la trame comportant les données utiles.

Ainsi, si l'indice supplémentaire est intégré dans l'en-tête, par exemple dans l'adresse MAC de la trame, il est lisible par tous les serveurs y compris ceux qui ne sont pas associés à l'objet connecté émetteur. Cela permettra à un serveur de déterminer un niveau de risque de répétition même s'il n'est pas associé à l'objet. Et, si l'indice supplémentaire est dans la partie utile de la trame, il sera plus difficile à un utilisateur malveillant réémettant des trames de trouver dans la partie utile l'indice supplémentaire et donc de le modifier rendant ainsi la singularisation des trames générées plus robuste.

Avantageusement, le procédé de génération de trames à émettre uniques comporte un cryptage d'une partie utile de la trame comportant les données utiles. Ainsi, l'indice supplémentaire sera crypté avec la partie utile lorsque la norme de transmission, telle que LoRa, le prévoit augmentant encore la robustesse de la singularisation des trames.

Un objet de l'invention est également un procédé de blocage de trames réémises reçues par un dispositif de communication connecté à au moins un objet connecté en provenance d'un objet connecté via un réseau de communication sans fil basse consommation, le procédé de blocage de trames réémises comporte une détection des trames réémises parmi les trames reçues par le dispositif de communication en provenance d'un objet connecté identifié dans la trame reçue via le réseau de communication sans fil basse consommation par comparaison du compteur et de l'indice supplémentaire d'une trame reçue avec respectivement le compteur et l'indice supplémentaire d'une trame reçue précédente en provenance du même objet connecté. Ainsi, deux trames provenant d'un même objet avec les mêmes données utiles seront uniques car elles comporteront au moins un compteur et/ou un indice supplémentaire distinct(s). L'utilisation de l'indice supplémentaire permet, sans réduire la durée de vie de l'objet connecté, de singulariser un plus grand nombre de trames qu'en utilisant seulement le compteur généralement intégré aux trames émises par les objets connectés permettant actuellement au serveur réseau de vérifier si une trame n'a pas été perdue.

Avantageusement, la détection de trames réémises est positive lorsque :
- le compteur de la trame reçue est inférieur ou égale au compteur de la trame reçue précédente et que l'indice supplémentaire est égal à ou a une valeur relative à l'indice supplémentaire de la trame précédente correspondant à une fonction inverse à la fonction monotone utilisée pour singulariser les trames à émettre;
- le compteur de la trame reçue est supérieur au compteur de la trame reçue précédente et que l'indice supplémentaire a une valeur relative à l'indice supplémentaire de la trame précédente correspondant à une fonction inverse à la fonction monotone utilisée pour singulariser les trames à émettre.

Ainsi, le blocage d'une trame reçue est effectué sur simple comparaison du compteur et de l'indice supplémentaire de la trame reçue avec la trame précédente provenant du même objet émetteur. Avantageusement, à l'issue de la détection, lorsqu'une réémission n'a pas été détectée, le compteur de la trame reçue et, lorsque l'indice supplémentaire diffère de celui de la trame précédemment reçue selon une fonction monotone de même ordre que celle utilisée pour singulariser les trames à émettre, l'indice supplémentaire sont stockés dans le dispositif de communication. Ainsi, la comparaison avec la trame précédente est facilitée par stockage du compteur et de l'indice supplémentaire à comparer. La passerelle ou le serveur mettant en oeuvre le procédé de blocage n'ont pas à conserver la totalité de la trame précédente réduisant la capacité de stockage nécessaire.

Un objet de l'invention est encore un procédé de traitement des trames reçues par un dispositif de communication connecté à au moins un objet connecté en provenance d'un réseau de communication sans fil basse consommation, le procédé de traitement des trames reçues comporte une détection des trames réémises parmi les trames reçues par le dispositif de communication en provenance d'un objet connecté identifié dans la trame reçue via le réseau de communication sans fil basse consommation par comparaison du compteur et de l'indice supplémentaire d'une trame reçue avec respectivement le compteur et l'indice supplémentaire d'une trame reçue précédente en provenance du même objet connecté, la détection transmettant à l'analyse du procédé de traitement des trames reçues les trames pour lesquelles une réémission n'a pas été détectée. Ainsi, il n'y a pas de surcharge, ni de pollution du traitement puisque celui-ci ne traite pas les trames répétées ou réémises.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif de communication et étant conçu pour commander l'exécution des différentes étapes de ce procédé. L'invention vise donc aussi un programme comprenant des instructions de code de programme pour l'exécution des étapes du procédé de singularisation des trames à émettre ou du procédé de génération de trames à émettre uniques ou du procédé de blocage de trames réémises ou du procédé de traitement de trames reçues lorsque ledit programme est exécuté par un processeur. Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est un générateur de trames à émettre uniques par un objet connecté à un serveur via un réseau de communication sans fil basse consommation, le générateur comporte :
- un distributeur des données utiles en trames à émettre identifiant l'objet connecté émetteur, et
- un intégrateur dans une trame à émettre d'au moins :
   - un compteur apte à être incrémenté en fonction de la trame à émettre, le compteur ayant une dimension prédéfinie ; et
   - un indice supplémentaire modifiable lors d'une mise à zéro du compteur.

Un objet de l'invention est un objet connecté à un serveur via un réseau de communication sans fil basse consommation, l'objet connecté comportant un générateur de trames à émettre uniques, le générateur comporte :
- un distributeur des données utiles en trames à émettre identifiant l'objet connecté émetteur, et
- un intégrateur dans une trame à émettre d'au moins :
   - un compteur apte à être incrémenté en fonction de la trame à émettre, le compteur ayant une dimension prédéfinie ; et
   - un indice supplémentaire modifiable lors d'une mise à zéro du compteur.

Un objet de l'invention est également un filtre bloque trames réémises d'un serveur recevant des trames en provenance d'un objet connecté via un réseau de communication sans fil basse consommation, le filtre bloque trames réémises comporte un détecteur des trames réémises parmi les trames reçues par le serveur en provenance d'un objet connecté identifié dans la trame reçue via le réseau de communication sans fil basse consommation par comparaison du compteur et de l'indice supplémentaire d'une trame reçue avec respectivement le compteur et l'indice supplémentaire d'une trame reçue précédente en provenance du même objet connecté.

Un objet de l'invention est encore une passerelle d'un réseau de communication sans fil basse consommation recevant des trames en provenance d'un objet connecté à destination d'un serveur connecté à un réseau Internet, le serveur comportant un analyseur des données utiles des trames reçues, la passerelle comportant un filtre bloque trames réémises, le filtre étant placé en amont de l'analyseur et comportant un détecteur des trames réémises parmi les trames reçues par la passerelle en provenance d'un objet connecté identifié dans la trame reçue via le réseau de communication sans fil basse consommation par comparaison du compteur et de l'indice supplémentaire d'une trame reçue avec respectivement le compteur et l'indice supplémentaire d'une trame reçue précédente en provenance du même objet connecté.

Un objet de l'invention est un serveur recevant des trames en provenance d'un objet connecté via un réseau de communication sans fil basse consommation, le serveur comportant un analyseur des données utiles des trames reçues et un filtre bloque trames réémises, le filtre étant placé en amont de l'analyseur et comportant un détecteur des trames réémises parmi les trames reçues par le serveur en provenance d'un objet connecté identifié dans la trame reçue via le réseau de communication sans fil basse consommation par comparaison du compteur et de l'indice supplémentaire d'une trame reçue avec respectivement le compteur et l'indice supplémentaire d'une trame reçue précédente en provenance du même objet connecté.

Les caractéristiques et avantages de l'invention apparaîtront plus clairement à la lecture de la description, faite à titre d'exemple, et des figures s'y rapportant qui représentent :
- Figures 1a et 1b, des schémas simplifiés d'une architecture de communication dans laquelle un objet connecté est relié à un serveur réseau via un réseau de communication sans fil basse consommation, respectivement dans un cas standard de communication et dans le cas où un dispositif tiers réémet des trames de communications précédemment émises par l'objet connecté,
- Figure 2, un schéma simplifié d'un procédé de singularisation de trames à émettre et d'un procédé de génération de trames à émettre unique selon l'invention,
- Figure 3, un schéma simplifié d'un procédé de blocage de trames réémises et d'un procédé de traitement de trames reçues selon l'invention,
- Figures 4a, 4b et 4c, des schémas simplifiés des dispositifs de communication mis en oeuvre dans une architecture de communication utilisant un réseau de communication sans fil basse consommation, respectivement, figure 4a, un générateur de trames à émettre unique et un objet connecté, figure 4b, un filtre bloque trames réémises, une passerelle et un serveur, et figure 4c, un filtre bloque trames réémises et un serveur, selon l'invention,
- Figures 5a à 5d, des schémas simplifiés de trame et requêtes échangées par un objet connecté à un réseau de communication sans fil basse consommation, respectivement, figure 5a, une trame à émettre selon la norme LoRa, figure 5b, un premier exemple d'intégration de l'indice supplémentaire dans la trame à émettre unique selon l'invention, figure 5c, un deuxième exemple d'intégration de l'indice supplémentaire dans la trame à émettre unique selon l'invention, figure 5d, une réponse à une requête de connexion selon la norme LoRa,
- Figure 6, un schéma simplifié d'un organigramme d'un procédé de singularisation de trames à émettre selon l'invention,
- Figure 7, un schéma simplifié d'un organigramme d'un procédé de blocage de trames réémises selon l'invention.

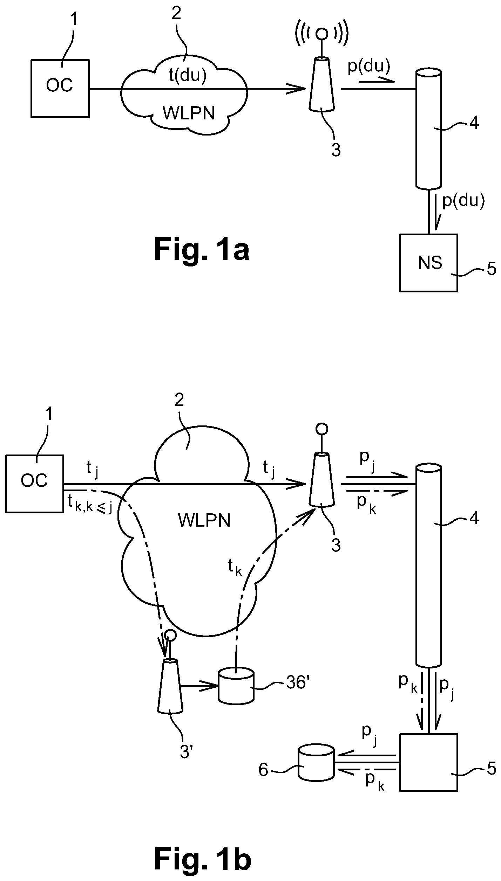

Les figures 1a et 1b illustrent des schémas simplifiés d'une architecture de communication dans laquelle un objet connecté est relié à un serveur réseau via un réseau de communication sans fil basse consommation, respectivement dans un cas standard de communication et dans le cas où un dispositif tiers réémet des trames de communications précédemment émises par l'objet connecté.

L'architecture de communication de la figure 1a comporte un objet connecté 1, notamment un dispositif de communication utilisant la technologie LoRa, aussi nommé Device LoRa en anglais. Un objet connecté OC est un dispositif connecté à Internet notamment par l'intermédiaire d'un réseau de communication sans fil basse consommation 2. L'architecture de communication comporte alors, par exemple, une passerelle 3 recevant les trames t émises par un ou plusieurs objets connectés 1 via le réseau de communication sans fil basse consommation WLPN (les trames t(du) comportant des données utiles du), et transmettant les trames t(du) via un réseau Internet 4, notamment, sous forme de paquet p(du) à un serveur réseau 5. La passerelle 3 est notamment apte à recevoir des trames dites LoRa, c'est-à-dire émises par un dispositif de communication utilisant la technologie LoRa, la passerelle est alors dite passerelle LoRa, ou encore Gateway LoRa en anglais. Le réseau internet 4 est notamment un réseau mettant en oeuvre le protocole TCP/IP. Lorsque la technologie utilisée par l'objet connecté OC est LoRa, le serveur réseau, Network Server en anglais, NS valide la trame reçue, c'est-à-dire qu'il vérifie si la trame reçue est émise par un objet connecté 1 associé au serveur réseau 5. Si c'est le cas, alors le serveur réseau 5 procède au traitement de la trame reçue : analyse et/ou stockage... Sinon, la trame reçue est rejetée par le serveur réseau 5, c'est-à-dire qu'il fait comme s'il ne l'avait pas reçue car elle ne l'intéresse pas. Certaines normes de transmission sur réseau de communication sans fil basse consommation, notamment la norme LoRaWan, définissent des mécanismes de sécurisation des trames transmises. Notamment, elles sont encryptées, dans l'exemple de la norme LoRaWan en AES. L'intégrité des données transmises dans ces trames est donc assurée mais pas la non-répétabilité des trames. En effet, en reniflant (en « sniffant » par anglicisme) une trame, la trame peut être réémise sur le réseau sans fil basse consommation. Et, la trame réémise est de nouveau prise en compte par le serveur réseau.

La figure 1b montre qu'un dispositif de communication tiers 3' placé dans le réseau de communication sans fil basse consommation 2 et se comportant comme une passerelle peut capturer une trame t(du) émise par un objet connecté 1. Ce dispositif de communication tiers est aussi nommé renifleur ou Sniffer en anglais, en particulier Sniffer LoRa dans le cas où les trames émises utilisent la technologie LoRa. Afin d'éviter que les données transmises par la trame soient lues par un tiers non autorisé, certaines technologies de transmission sur réseau de communication sans fil basse consommation 2 cryptent les données utiles *du* avant de les intégrer dans la trame de transmission t. Ainsi, le renifleur 3' peut simplement réceptionner les trames émises et/ou les stocker par exemple dans une base de données 36' et éventuellement les réémettre dans le réseau de communication sans fil basse consommation afin qu'elles soient reçues par la passerelle 3. Par exemple, un objet connecté 1 envoie une trame tₖ. Cette trame tₖ est reçue par la passerelle 3 à un instant k via le réseau de communication sans fil basse consommation 2, puis transmise sous forme de paquet pk via le réseau Internet 4 au serveur 5 qui, la trame tk ayant été validée, la traite (notamment la stocke dans une base de données réseau 6) (Non illustrée). En parallèle, cette même trame tₖ est notamment capturée par un renifleur 3' qui la stocke notamment dans une base de données du renifleur 36'. Ultérieurement (k < j), alors que l'objet connecté 1 envoie une trame tⱼ, la trame tj est reçue par la passerelle 3 à un instant j via le réseau de communication sans fil basse consommation 2, puis transmise sous forme de paquet pj via le réseau Internet 4 au serveur 5 qui, la trame tj ayant été validée, la traite (notamment la stocke dans une base de données réseau 6). A tout moment, le renifleur 3' peut réémettre une trame tk préalablement reçue et éventuellement stockée dans sa base de données 36' via le réseau de communication sans fil basse communication 2. Ainsi, la trame tk sera reçue par la passerelle 3 au moins une deuxième fois (voire plus), soit peu après la réception de la trame tₖ provenant directement de l'objet connecté 1, soit à l'instant j, etc. Eventuellement, le renifleur 3' peut intercepter la trame tⱼ pour la remplacer par la trame tₖ préalablement stockée. La passerelle 3 traitera la trame tₖ réémise par le renifleur 3' comme n'importe quelle trame reçue en la transmettant au serveur 5 via le réseau Internet 4, par exemple sous forme de paquet pk. Et, de même le serveur réseau 5 traitera la trame tₖ réémise en, la trame tₖ ayant été validée, la traitant (notamment la stockant dans une base de données réseau 6). En effet, les trames transmises via les réseaux de communication sans fil basse consommation ne permettent pas de distinguer une trame reçue directement d'un objet connecté 1 par la passerelle 3 d'une trame réémise car afin de s'adapter à ce type de réseau basse consommation, le poids des trames transmises est réduit. Notamment, les trames émises par les objets connectés 1 ne sont pas horodatées ce qui aurait permis facilement de distinguer une trame reçue directement d'une trame réémise mais n'est pas adaptée au réseau basse consommation en raison du poids de l'horodatage. L'invention proposée permet à la passerelle 3 ou au serveur 5 de détecter une trame réémise et d'éviter la répétabilité. Elle permet notamment d'éviter au serveur 5 d'acquitter et/ou de stocker une information (des données utiles) d'une trame déjà transmise. Même si les données utiles sont protégées par un cryptage et ne peuvent être ni lues, ni modifiées, la réémission de trames peut nuire à l'intégrité des données transmises par un objet connecté. En effet, si une trame de télémétrie est réémise, le traitement des données de télémétries sera perturbé puisque la même donnée sera stockée deux fois dans la base de données faussant les analyses ultérieures : calcul de consommation, commande fonction de ces données...

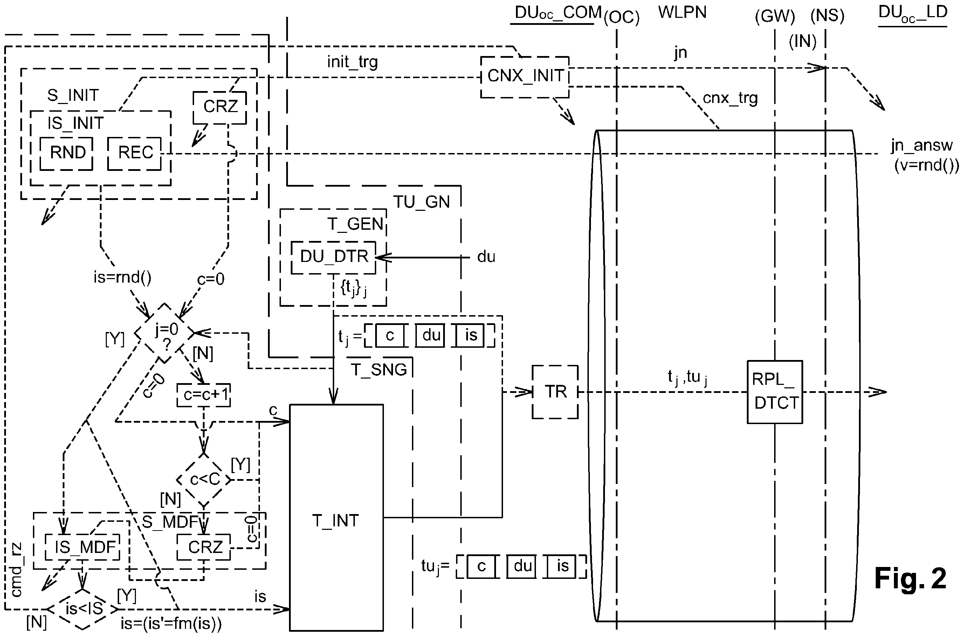

La figure 2 illustre un schéma simplifié d'un procédé de singularisation de trames à émettre et d'un procédé de génération de trames à émettre unique selon l'invention. L'invention peut être mise en oeuvre coté objet connecté notamment au moyen d'un procédé de singularisation des trames à émettre T_SNG par un objet connecté OC à un serveur NS via un réseau de communication sans fil basse consommation WLPN. Le procédé de singularisation T_ SNG comporte une intégration T _INT, dans une trame à émettre tⱼ identifiant l'objet connecté émetteur *id_{OC}* et comportant des données utiles *du,* d'au moins :
- un compteur c apte à être incrémenté en fonction de la trame à émettre, le compteur ayant une dimension prédéfinie (c < C); et
- un indice supplémentaire is modifiable lors d'une mise à zéro du compteur CRZ.

L'utilisation d'un indice supplémentaire is permet de réduire le poids du compteur c dans la trame tout en ne réduisant pas la durée de vie de l'objet connecté. Notamment, l'indice supplémentaire permet d'utiliser les compteurs prévus par les technologies de transmission de trames dans les réseaux de communication sans fil basse consommation, tel que le compteur LoRa qui permet de déterminer les pertes de trames lors de la transmission. Ces compteurs sont généralement très légers : par exemple 2 octets pour la technologie LoRa. En effet, si les compteurs existants étaient détournés seuls de leur usage premier pour détecter la réémission d'une trame, cela réduirait considérablement la durée de vie de l'objet connecté. Par exemple, pour un compteur de détermination de perte de trames codé sur 2 octets soit 16 bits, seulement 65536 trames avec un compteur distinct peuvent être transmises. Si la période d'émission de l'objet connecté est de 5 minutes, alors le compteur aura effectué un cycle complet en à peine 6 mois. Donc, un blocage des trames basé sur ce seul compteur réduirait la durée de vie de l'objet à seulement 6 mois ! Une solution pourrait être de faire une nouvelle souscription de l'objet connecté au service, telle qu'une nouvelle souscription OTAA(JoinRequest) définie par la norme LoRaWan mais cette solution est complexe et lourde en termes de charge réseau puisqu'elle nécessite la mise en oeuvre des échanges nécessaire à cette nouvelle souscription. En outre, ces compteurs étant simplement prévus pour détecter la perte de trame, ceux-ci sont facilement remis à zéro à la mise hors tension de l'objet connecté car il n'est pas stocké de manière persistante. Ainsi, la mise en place d'un blocage de trame basé sur ce seul compteur rendrait l'objet connecté obsolète à la moindre mise hors tension. L'avantage de ne pas avoir un compteur seul destiné à la détection de réémission de trames, éventuellement en plus d'un compteur de détection de perte de trames, est de limiter le poids nécessaire dans la trame pour cette détection de réémission ce qui n'est pas anodin dans le cas de la transmission sur un réseau de communication sans fil basse consommation. En outre, l'utilisation de l'indice supplémentaire permet d'utiliser un compteur éventuellement non persistant sur l'objet connecté.

En particulier, la première valeur de l'indice supplémentaire dans la première trame à émettre par l'objet *tu₁(is₁=rnd())* après la connexion de l'objet OC avec un serveur NS est une valeur résultant d'une fonction aléatoire *is=rnd().*

En particulier, la première valeur de l'indice supplémentaire dans la première trame à émettre par l'objet *tu₁(is₁=v=rnd())* après la connexion de l'objet OC avec un serveur NS est une valeur résultant d'une fonction aléatoire reçue par l'objet en provenance du serveur NS en réponse à une demande de connexion de l'objet au serveur *jn_answ(v=rnd()).*

En particulier, la première valeur de l'indice supplémentaire dans la première trame à émettre par l'objet *tu₁(is₁=AN=rnd())* après la connexion de l'objet OC avec un serveur NS est une valeur d'un paramètre AN de génération d'au moins une clé de cryptage des données utiles à transmettre résultant d'une fonction aléatoire et reçue par l'objet en provenance du serveur NS *jn_answ(AN=rnd()).*

En particulier, l'indice supplémentaire is résulte d'une fonction monotone *is=(is'=fₘ(is)),* par exemple, une fonction croissante.

En particulier, le procédé de singularisation T_SNG comporte une modification de l'indice supplémentaire IS_MDF déclenchée par une mise à zéro du compteur CRZ. : La valeur de l'indice supplémentaire is est égale à une valeur prise aléatoirement entre une valeur précédente de l'indice supplémentaire et la valeur borne de l'indice supplémentaire *is= (is'=rnd[is, IS]).*

En particulier, le procédé de singularisation T_SNF déclenche *cnx_rz* une nouvelle requête de connexion *jn* de l'objet connecté OC à destination du serveur NS lorsque l'indice supplémentaire atteint la valeur borne *is <IS* = [N].

Un autre mode de réalisation de l'invention coté objet connecté est notamment un procédé de génération de trames à émettre uniques TU_GN par un objet connecté OC à serveur NS via un réseau de communication sans fil basse consommation WLPN. Le procédé de génération TU_ GEN comporte :
- une distribution DU_DTR des données utiles du en trames à émettre {tⱼ}ⱼ identifiant l'objet connecté émetteur, et
- une intégration T_INT dans une trame à émettre tuⱼ=f(tⱼ) d'au moins :
   - un compteur c apte à être incrémenté en fonction de la trame à émettre, le compteur ayant une dimension prédéfinie (c <C ); et
   - un indice supplémentaire is modifiable lors d'une mise à zéro du compteur CRZ.

En particulier, le compteur c est intégré dans un en-tête de trame FHDR, aussi nommé Frame HeaDeR en anglais.

En particulier, l'indice supplémentaire is est intégré dans un des éléments suivants de la trame :
- un en-tête de trame FHDR;
- une partie utile de la trame FDU comportant les données utiles *du.*

En particulier, le procédé de génération de trames à émettre uniques TU_GN comporte un cryptage CRY (non illustré) d'une partie utile de la trame FDU comportant les données utiles *du.* En particulier, le procédé de génération de trames TU_GEN comporte le procédé de singularisation de trames T_SNG. Lorsqu'un objet connecté mettant en oeuvre le procédé de singularisation T_SNG et/ou le procédé de génération de trames uniques TU_GN initie CNX_INT une connexion avec un serveur NS via un réseau de communication sans fil basse consommation WLPN relayée par la passerelle GW sur un réseau Internet IN auquel le serveur NS est connecté, l'objet connecté OC envoie une requête de connexion *jn* (nommée *join* dans la technologie LoRa). A cette requête de connexion *jn,* le serveur NS envoie une réponse *jn_answ* qui comporte éventuellement une valeur aléatoire *v*= *rnd().* En particulier, cette valeur aléatoire est un paramètre AN permettant à l'objet connecté OC de crypter la partie utile des trames qu'il émet. Cette réponse *jn_answ* est notamment transmise en utilisant la session de communication établie *cnx_trg* par l'objet connecté OC avec le serveur NS suite à sa demande de connexion *jn.* L'initialisation de la connexion CNX_INT déclenche init_trg une initialisation des singularités S_INIT (les singularités de la trame selon l'invention comportent le compteur *c* et l'indice supplémentaire is). Cette initialisation des singularités comporte notamment la mise à zéro du compteur CRZ : c=0, et l'initialisation de l'indice supplémentaire IS_INIT de tel sorte que l'indice supplémentaire est égal à une valeur aléatoire *is=rnd().* Cette initialisation de l'indice supplémentaire IS_INIT consiste soit en la mise en oeuvre d'une fonction aléatoire par l'objet connecté RND, soit en la réception REC d'une valeur aléatoire v=rnd() provenant du serveur NS.

En particulier, le procédé de singularisation T_SNG et/ou le procédé de génération de trame unique comporte la mise à zéro du compteur CRZ par l'initialisation de la connexion CNX_INIT et l'initialisation de l'indice supplémentaire IS_INIT.

L'objet connecté OC récupère des données utiles *du* notamment en les captant ou en les élaborant par analyse. L'objet connecté OC traite ces données utiles *du* pour les transmettre au serveur NS. Notamment, les données utiles *du* sont distribuées en trames DU_DTR ou, plus généralement, des trames à émettre *{tⱼ}ⱼ* comportant ces données utiles *du* sont générées T_GEN : *tⱼ ⊃ du.* La génération de trames à émettre T_GEN comporte éventuellement une distribution des données utiles en trames DU_DTR. Ainsi, pour la première trame unique j= 0 ? [Y], le compteur c intégré T_INT dans la trame tu₀ a une valeur nulle c=0 et l'indice supplémentaire is intégré T_INT dans la trame tu₀ est égale à la valeur aléatoire initiale (notamment reçue du serveur NS) *is=rnd().*

Pour les trames suivantes j= 0 ? [N], le compteur est incrémenté c=c+1. En particulier, le procédé de singularisation T_SNG et/ou le procédé de génération de trames uniques TU_GN comporte l'incrémentation du compteur c=c+1. Puis, il est vérifié si la valeur du compteur est inférieure à sa valeur borne c <C = [Y] permettant de coder le compteur sur la trame unique à émettre lors de l'intégration T_INT. La valeur de l'indice supplémentaire is intégrée dans ces trames suivantes T_INT est identique à la valeur l'indice supplémentaire is dans la trame précédente. Si la valeur du compteur est inférieure à sa valeur borne c <C = [N], alors le compteur est mis à zéro CRZ déclenchant une modification de l'indice supplémentaire IS_MDF.

En particulier, le procédé de singularisation T_SNG et/ou le procédé de génération de trame unique comporte la vérification de la valeur du compteur par rapport à sa valeur borne c < C.

En particulier, la modification d'indice supplémentaire IS_MDF utilise la valeur précédente de l'indice supplémentaire pour déterminer une nouvelle valeur qui est par exemple une fonction monotone (notamment une fonction croissante). En particulier, le procédé de singularisation T_SNG et/ou le procédé de génération de trame unique comporte modification d'indice supplémentaire IS_MDF. Puis, il est vérifié si la valeur de l'indice supplémentaire respecte la valeur borne, notamment est inférieure à sa valeur borne is <IS = [Y] lorsque la fonction est croissante, permettant de coder l'indice supplémentaire is sur la trame unique à émettre lors de l'intégration T_INT. La valeur de l'indice supplémentaire is intégrée dans cette trame et les trames suivantes T_INT est la nouvelle valeur l'indice supplémentaire is résultant de la modification IS_MDF. Sinon, c'est-à-dire si la valeur de l'indice supplémentaire ne respecte pas la valeur borne, notamment n'est pas inférieure à sa valeur borne is <IS = [N] lorsque la fonction est croissante, alors la connexion est réinitialisée cnx_rz, c'est-à-dire que la vérification de l'indice supplémentaire déclenche cnx_rz une initialisation d'une nouvelle connexion CNX_INT, éventuellement suite à une clôture de la connexion en cours. Ainsi, les trames étant émises dans une nouvelle connexion, la réémission de trames émises dans la précédente connexion pourra être détectée par détection du changement de connexion, notamment identifiant de connexion ou clé cryptage différent, etc.

En particulier, le procédé de génération de trames uniques TU_GEN comporte le procédé de génération de trames à émettre T_GEN.

En particulier, l'objet connecté met en oeuvre un procédé de communication DU_{OC}_COM comportant une émission de trames TR comportant des données utiles tⱼ, tuⱼ. Notamment, le procédé de communication DU_{OC}_COM comporte l'initialisation de connexion CNX_INT avec le serveur NS via le réseau de communication sans fil basse consommation WLPN.

Eventuellement, le procédé de communication DU_{OC}_COM comporte une distribution des données utiles en trames DU_DTR et/ou un procédé de singularisation T_SNG et/ou une génération de trames à émettre T_GEN et/ou un procédé de génération de trames uniques TU_GEN. Ainsi, le serveur NS met en oeuvre un procédé de chargement de données d'objet connecté DU_{OC_}LD recevant les trames émises par des objets connectés via un réseau de communication sans fil basse consommation. Ce procédé de chargement comporte notamment l'envoi d'une réponse à une demande de connexion *jn_answ* comportant une valeur aléatoire *v=rnd()* et la réception de trames tⱼ, tuⱼ.

Eventuellement, la passerelle GW met en oeuvre une détection de trames réémises RPL_DTCT permettant de transmettre au serveur NS uniquement les trames détectées comme non réémises, c'est-à-dire reçues par la passerelle directement d'un objet connecté.

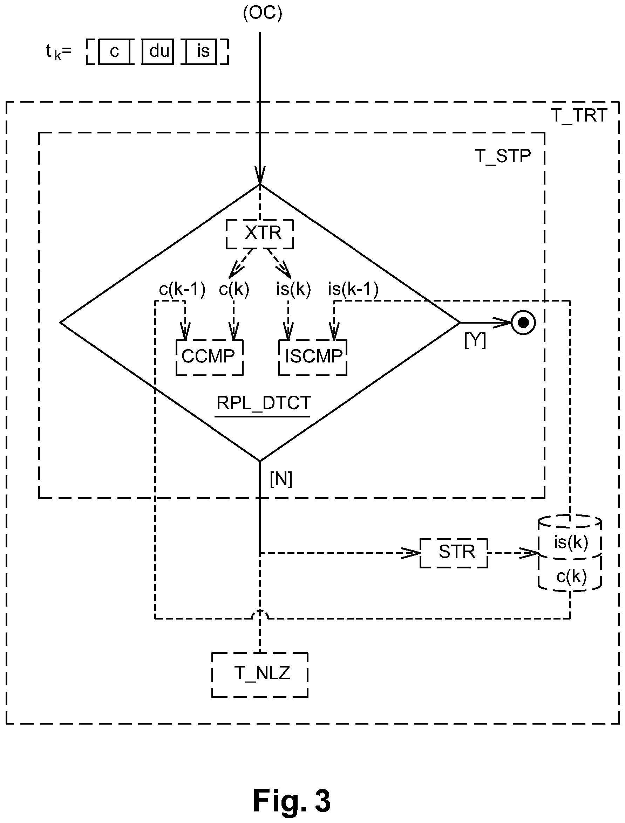

La figure 3 illustre un schéma simplifié d'un procédé de blocage de trames réémises et d'un procédé de traitement de trames reçues selon l'invention. Le procédé de blocage T_STP de trames réémises est mis en oeuvre par un dispositif de communication GW recevant les trames, le dispositif de communication étant connecté à au moins un objet connecté OC, en provenance d'un objet connecté via un réseau de communication sans fil basse consommation WLPN. Notamment, le dispositif de communication est une passerelle GW d'une architecture de communication utilisant un réseau de communication sans fil basse consommation WLPN apte à mettre en oeuvre le procédé de blocage T_STP. Ou, éventuellement, le dispositif de communication est un serveur NS d'une architecture de communication utilisant un réseau de communication sans fil basse consommation WLPN apte à mettre en oeuvre le procédé de blocage T_STP. Le procédé de blocage T_STP de trames réémises comporte une détection des trames réémises RPL_DTCT parmi les trames reçues par le dispositif de communication GW, NS en provenance d'un objet connecté OC identifié dans la trame reçue via le réseau de communication sans fil basse consommation WLPN par comparaison CCMP du compteur c(k) et de l'indice supplémentaire ISCMP d'une trame reçue is(k) avec respectivement le compteur c(k-1) et l'indice supplémentaire is(k-1) d'une trame reçue précédente en provenance du même objet connecté OC.

En particulier, la détection de trames réémises RPL_DTCT est positive [Y]lorsque :
- le compteur de la trame reçue est inférieur ou égal au compteur de la trame reçue précédente c(k) < c(k-1) et que l'indice supplémentaire est égal à ou a une valeur relative à l'indice supplémentaire de la trame précédente correspondant à une fonction inverse à la fonction monotone utilisée pour singulariser les trames à émettre, par exemple is(k) < is(k-1) pour une fonction croissante;
- le compteur de la trame reçue est supérieur au compteur de la trame reçue précédente c(k) > c(k-1) et que l'indice supplémentaire a une valeur relative à l'indice supplémentaire de la trame précédente correspondant à une fonction inverse à la fonction monotone utilisée pour singulariser les trames à émettre, par exemple is(k) < is(k-1) pour une fonction croissante.

Lorsque la détection de réémission RPL_DTCT est positive [Y], la trame reçue tk est bloquée, c'est-à-dire qu'elle n'est pas transmise au serveur NS lorsque la détection est mise en oeuvre par la passerelle GW permettant ainsi d'éviter une surcharge du réseau Internet et du serveur lié à des réémissions abusives ou que les données utiles de la trame ne sont pas traitées par le serveur, c'est-à-dire analysées et/ou stockées, évitant les surcharges en terme de coût de calcul ou mémoire, lorsque la détection est mise en oeuvre par le serveur NS.

En particulier, à l'issue de la détection RPL_DTCT, lorsqu'une réémission n'a pas été détectée [N], le compteur de la trame reçue c(k) et, lorsque l'indice supplémentaire diffère de celui de la trame précédemment reçue selon une fonction monotone de même ordre que celle utilisée pour singulariser les trames à émettre, par exemple is(k) > is(k-1) pour une fonction croissante, l'indice supplémentaire is(k) sont stockés STR dans le dispositif de communication GW, NS mettant en oeuvre le procédé de blocage de trames réémises.

La détection de réémission RPL_DTC peut aussi être mise en oeuvre par un procédé de traitement des trames reçues par un dispositif de communication connecté à au moins un objet connecté via un réseau de communication sans fil basse consommation. Le procédé de traitement est généralement mis en oeuvre par le serveur NS, mais peut aussi être mis en oeuvre par la passerelle GW. Le procédé de traitement des trames reçues T_TRT comporte une détection des trames réémises RPL_DTCT parmi les trames reçues par le dispositif de communication en provenance d'un objet connecté identifié dans la trame reçue via le réseau de communication sans fil basse consommation par comparaison du compteur et de l'indice supplémentaire d'une trame reçue avec respectivement le compteur et l'indice supplémentaire d'une trame reçue précédente en provenance du même objet connecté, la détection RPL_DTCT transmettant à l'analyse T_NLZ du procédé de traitement des trames reçues les trames pour lesquelles une réémission n'a pas été détectée.

Eventuellement, la détection de réémission RPL_DTC comporte une extraction XTR du compteur c et de l'indice supplémentaire des trames reçues, l'extraction XTR fournit les valeurs extraites c(k) et is(k) aux comparaisons respectivement de compteur CCMP et d'indice supplémentaire ISCMP. Un mode de réalisation d'un ou plusieurs des procédés décrits à titre d'exemple par les figures 2 et 3 est un programme comprenant des instructions de code de programme pour l'exécution des étapes du procédé de singularisation des trames à émettre ou du procédé de génération de trames à émettre uniques ou du procédé de blocage de trames réémises ou du procédé de traitement de trames reçues lorsque ledit programme est exécuté par un processeur.

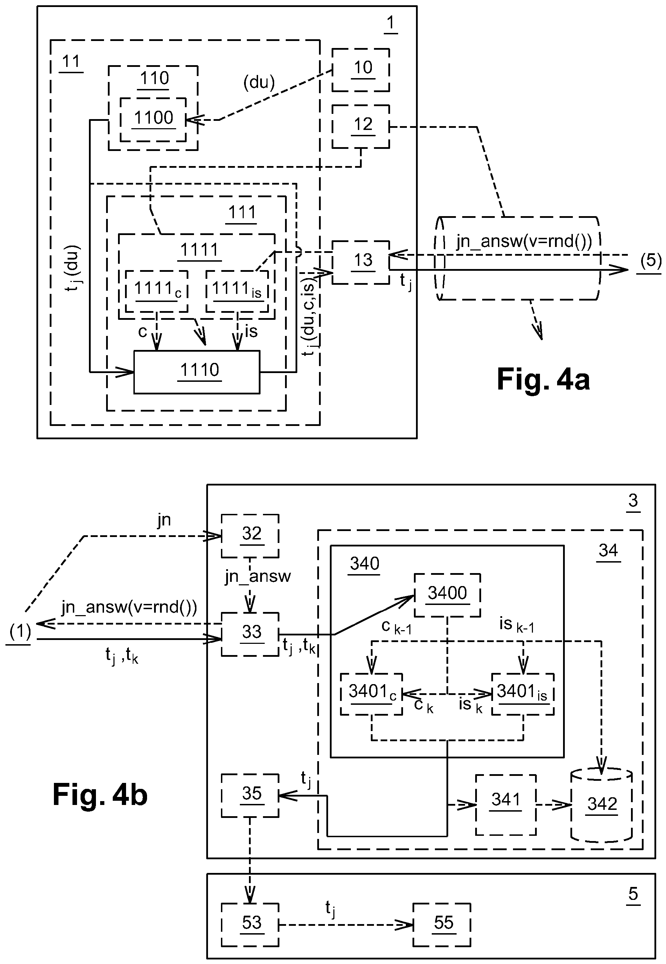

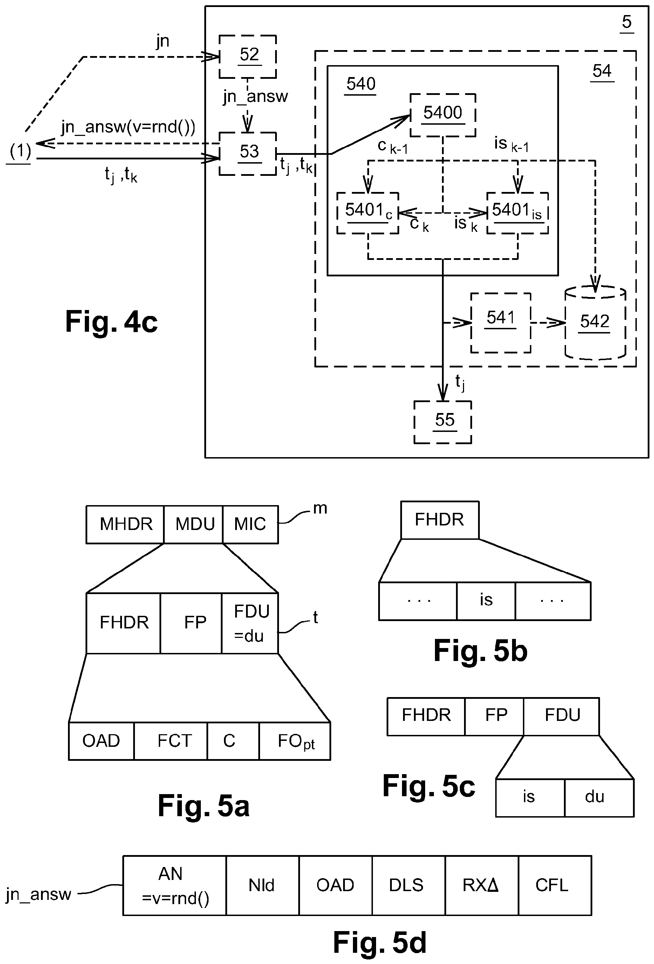

Les figures 4a, 4b et 4c illustrent des schémas simplifiés des dispositifs de communication mis en oeuvre dans une architecture de communication utilisant un réseau de communication sans fil basse consommation.

La figure 4a illustre un schéma simplifié d'un générateur de trames à émettre unique et d'un objet connecté selon l'invention. Un générateur de trames à émettre uniques 11 par un objet connecté 1 à un serveur 5 via un réseau de communication sans fil basse consommation, le générateur 11 comporte :
- un distributeur 1100 des données utiles *du* en trames à émettre identifiant l'objet connecté émetteur, et
- un intégrateur 1110 dans une trame à émettre *tⱼ(du)* d'au moins :
   - un compteur *c* apte à être incrémenté en fonction de la trame à émettre, le compteur ayant une dimension prédéfinie ; et
   - un indice supplémentaire *is* modifiable lors d'une mise à zéro du compteur.

En particulier, le générateur de trames à émettre unique 11 comporte un générateur de trames 110 recevant des données utiles et fournissant des trames comportant ces données utiles à l'intégrateur 1110.

En particulier, le générateur de trames à émettre unique 11 comporte un générateur de singularités 1111 fournissant à l'intégrateur 1110 un compteur c et un indice supplémentaire is. Le générateur de singularité comporte notamment un modificateur 1111c de compteur comportant un incrémenteur et un modificateur 1111 is d'indice supplémentaire mettant en oeuvre une fonction monotone. Le modificateur de compteur 1111c comporte, en particulier, un réinitialiseur de compteur mettant la valeur du compteur à zéro en fonction de la valeur en sortie de l'incrémenteur (lorsque la valeur incrémentée atteint une valeur maximale du compteur C). Le modificateur d'indice supplémentaire 1111 is est commandé par le réinitialiseur de compteur. Eventuellement, lorsque la valeur modifiée est supérieure ou égale à une valeur maximale de l'indice supplémentaire IS, le modificateur d'indice supplémentaire ne fournit pas un indice supplémentaire modifié mais déclenche une réinitialisation de la connexion de l'objet connecté 1 avec le serveur 5.

En particulier, l'architecture d'émission de trames sur un réseau de communication sans fil basse consommation comporte un objet connecté 1 à un serveur 5 via un réseau de communication sans fil basse consommation. L'objet connecté comporte un intégrateur 1110 permettant de fournir des trames à émettre unique comportant outre les données utiles :
- un compteur apte à être incrémenté en fonction de la trame à émettre, le compteur ayant une dimension prédéfinie ; et
- un indice supplémentaire modifiable lors d'une mise à zéro du compteur.

En particulier, l'objet connecté comporte au moins un capteur 10 fournissant des données utiles *du.* Le capteur 10 effectue éventuellement un traitement des données captées. Les données utiles fournies par le capteur 10 sont alors constituées de données captées et/ou de données captées traitées.

En particulier, le générateur de trames à émettre unique 11 comporte un distributeur de données utiles en trames 1100 et/ou un générateur de trames 110 recevant des données utiles et fournissant des trames comportant ces données utiles à l'intégrateur 1110.

En particulier, l'objet connecté comporte un générateur de singularités 1111 fournissant à l'intégrateur 1110 un compteur c et un indice supplémentaire is. Le générateur de singularité comporte notamment un modificateur 1111c de compteur comportant un incrémenteur et un modificateur 1111is d'indice supplémentaire mettant en oeuvre une fonction monotone. Le modificateur de compteur 1111c comporte, en particulier, un réinitialiseur de compteur mettant la valeur du compteur à zéro en fonction de la valeur en sortie de l'incrémenteur (lorsque la valeur incrémentée atteint une valeur maximale du compteur C). Le modificateur d'indice supplémentaire 1111 is est commandé par le réinitialiseur de compteur. Eventuellement, lorsque la valeur modifiée est supérieure ou égale à une valeur maximale de l'indice supplémentaire IS, le modificateur d'indice supplémentaire ne fournit pas un indice supplémentaire modifié mais déclenche une réinitialisation de la connexion de l'objet connecté 1 avec le serveur 5.

En particulier, l'objet connecté 1 comporte un générateur de trames à émettre uniques 11 comportant :
- un distributeur 1100 des données utiles en trames à émettre identifiant l'objet connecté émetteur, et
- un intégrateur 1110 dans une trame à émettre d'au moins :
   - un compteur apte à être incrémenté en fonction de la trame à émettre, le compteur ayant une dimension prédéfinie ; et
   - un indice supplémentaire modifiable lors d'une mise à zéro du compteur.

En particulier, l'objet connecté 1 comporte un dispositif de connexion 10 apte à émettre une demande de connexion à destination d'un serveur 5 via le réseau de communication sans fil basse consommation jn. L'objet connecté 1 comporte un transmetteur sans fil basse consommation 12 apte à recevoir une réponse à cette demande de connexion jn_answ comportant notamment une valeur aléatoire v=rnd(). En particulier, la valeur aléatoire reçue est utilisée par le modificateur d'indice supplémentaire 1111ᵢₛ pour initialiser l'indice supplémentaire is=v=rnd() lors de l'initialisation de la connexion.

En particulier, lors de l'initialisation de la connexion par le dispositif de connexion 10, le modificateur de compteur 1111c met le compteur à zéro c=0. L'objet connecté 1 peut ainsi transmettre soit comme l'art antérieur des trames tj générées par un générateur de trames à émettre 110, soit selon l'invention des trames uniques tuⱼ (du, c, is) fournies par l'intégrateur 1110 au moyen du transmetteur sans fil basse consommation 13.

La figure 4b illustre un schéma simplifié d'une architecture de réception de trames comportant une passerelle, un serveur, et éventuellement un filtre bloque trames selon l'invention. Un filtre bloque trames réémises 34 reçoit des trames tj, tk en provenance d'un objet connecté 1 via un réseau de communication sans fil basse consommation. Le filtre bloque trames réémises 34 comporte un détecteur des trames réémises 340 parmi les trames reçues en provenance d'un objet connecté identifié dans la trame reçue via le réseau de communication sans fil basse consommation par comparaison du compteur et de l'indice supplémentaire d'une trame reçue avec respectivement le compteur et l'indice supplémentaire d'une trame reçue précédente en provenance du même objet connecté.

En particulier, le détecteur de trames réémises 340 comporte un comparateur de compteur 3401c et un comparateur d'indice supplémentaire 3401is mettant en oeuvre les comparaisons respectives.

En particulier, le détecteur de trames réémises 340 comporte un extracteur 3400 récupérant dans une trame reçue tk le compteur ck et l'indice supplémentaire isk pour les comparaisons respectives.

En particulier, le filtre bloque trames 34 comporte une mémoire 342 dans laquelle sont lues le compteur et l'indice supplémentaire de la trame précédente.

En particulier, le filtre bloque trames 340 comporte un enregistreur 341 déclenché par le détecteur de trames réémises 340 lorsqu'il ne détecte pas de réémission pour stocker le compteur et l'indice supplémentaire de la trame reçue. Le filtre bloque trames 34 fournit uniquement les trames reçues pour lesquelles le détecteur de trames réémises 340 n'a pas détecté de réémission. Ainsi, le filtre bloque trames peut aussi être nommé filtre d'omission de trame car il omet de transmettre les trames réémises.

Dans un mode de réalisation particulier illustrée par la figure 4b, une passerelle 3 d'un réseau de communication sans fil basse consommation recevant des trames en provenance d'un objet connecté 1 à destination d'un serveur connecté à un réseau Internet comporte le détecteur de trame réémises 340. Notamment, la passerelle 3 comporte le filtre bloque trames réémises 34. Le serveur 5 comporte un analyseur 55 des données utiles des trames reçues. Le filtre 34 est placé en amont de l'analyseur 55 et comporte le détecteur des trames réémises 340 parmi les trames reçues par la passerelle 3 en provenance d'un objet connecté 1 identifié dans la trame reçue via le réseau de communication sans fil basse consommation par comparaison du compteur et de l'indice supplémentaire d'une trame reçue avec respectivement le compteur et l'indice supplémentaire d'une trame reçue précédente en provenance du même objet connecté.

En particulier, la passerelle 3 comporte un dispositif de connexion 32 apte à recevoir demande de connexion *jn* d'un objet connecté 1. En réponse à la demande de connexion *jn,* le dispositif de connexion 32 fournit directement ou indirectement une réponse *jn_answ* comportant éventuellement une valeur aléatoire *v=rnd()* à un transmetteur sans fil basse consommation 33 de la passerelle 3. Par indirectement est entendu que le dispositif de connexion 32 relaie, notamment au moyen d'un transmetteur Internet 35 via le réseau internet la demande de connexion jn au serveur 5 qui fournit la réponse *jn_answ* à la passerelle qui la relaie via le réseau sans fil basse consommation à l'objet connecté.

En particulier, la passerelle 3 comporte un transmetteur sans fil basse consommation 33 apte à recevoir les trames émises tⱼ, tₖ par l'objet connecté 1, et un transmetteur Internet 35 apte à transmettre au serveur via le réseau Internet les trames reçues non bloquées par le filtre bloque trames 34 ou détectées non réémises par le détecteur de trames réémises 340. Le serveur 5 comporte notamment un transmetteur Internet 53 apte à recevoir les trames non bloquées tj. Le transmetteur Internet 53 fournit les trames non bloquées car non réémises à l'analyseur 55.

La figure 4c illustre un schéma simplifié d'une architecture de réception de trames comportant un serveur 5, et éventuellement un filtre bloque trames 34 selon l'invention. Un filtre bloque trames réémises 34 reçoit des trames tj, tk en provenance d'un objet connecté 1 via un réseau de communication sans fil basse consommation. Le filtre bloque trames réémises 34 comporte un détecteur des trames réémises 340 parmi les trames reçues en provenance d'un objet connecté identifié dans la trame reçue via le réseau de communication sans fil basse consommation par comparaison du compteur et de l'indice supplémentaire d'une trame reçue avec respectivement le compteur et l'indice supplémentaire d'une trame reçue précédente en provenance du même objet connecté.

En particulier, le détecteur de trames réémises 340 comporte un comparateur de compteur 3401c et un comparateur d'indice supplémentaire 3401is mettant en oeuvre les comparaisons respectives.

En particulier, le détecteur de trames réémises 340 comporte un extracteur 3400 récupérant dans une trame reçue tk le compteur ck et l'indice supplémentaire isk pour les comparaisons respectives.

En particulier, le filtre bloque trames 34 comporte une mémoire 342 dans laquelle sont lues le compteur et l'indice supplémentaire de la trame précédente.

En particulier, le filtre bloque trames 340 comporte un enregistreur 341 déclenché par le détecteur de trames réémises 340 lorsqu'il ne détecte pas de réémission pour stocker le compteur et l'indice supplémentaire de la trame reçue. Le filtre bloque trames 34 fournit uniquement les trames reçues pour lesquelles le détecteur de trames réémises 340 n'a pas détecté de réémission.

Dans un mode de réalisation particulier illustré par la figure 4c, un serveur 5 d'un réseau Internet reçoit des trames en provenance d'un objet connecté 1 via un réseau de communication sans fil basse consommation. Le serveur 5 reçoit des trames en provenance d'un objet connecté 1 via un réseau de communication sans fil basse consommation. En outre, le serveur 5 comporte un analyseur 55 des données utiles des trames reçues. Le serveur 5 comporte un détecteur de trame réémises 540. Notamment, le serveur 5 comporte le filtre bloque trames réémises 54, aussi nommé filtre d'omission de trames réémises. Le filtre 54 est placé en amont de l'analyseur 55 et comporte le détecteur des trames réémises 540 parmi les trames reçues par le serveur 5 en provenance d'un objet connecté 1 identifié dans la trame reçue via le réseau de communication sans fil basse consommation par comparaison du compteur et de l'indice supplémentaire d'une trame reçue avec respectivement le compteur et l'indice supplémentaire d'une trame reçue précédente en provenance du même objet connecté.

En particulier, le serveur 5 comporte un dispositif de connexion 52 apte à recevoir demande de connexion *jn* d'un objet connecté 1. En réponse à la demande de connexion *jn,* le dispositif de connexion 52 fournit une réponse *jn_answ* comportant éventuellement une valeur aléatoire *v=rnd()* à un transmetteur Internet 53 du serveur 5.

En particulier, le serveur 5 comporte un transmetteur Internet 53 apte à recevoir au serveur via le réseau Internet les trames en provenance d'un objet connecté via un réseau de communication sans fil basse consommation et relayer par une passerelle (non illustré) sur le réseau Internet.

Les figures 5a à 5d illustrent des schémas simplifiés de trames et requêtes échangées par un objet connecté à un réseau de communication sans fil basse consommation.

La figure 5a illustre une trame à émettre, notamment selon la norme LoRa. Un message m émis par un objet connecté OC comporte un en-tête de message MHDR, des données utiles du message MDU, aussi nommé MACPayload dans la norme LoRa, et un code d'intégrité du message MIC. Les données utiles du message MDU comportent une ou plusieurs trames de données t. Une trame t est composée de plusieurs blocs de données : un premier bloc composant un en-tête de trame FHDR, un deuxième bloc composant une adresse associée à la trame FP, aussi nommé FPort dans le cas d'une trame LoRa, et un troisième bloc comportant les données utiles de la trame FDU dont les données utiles *du* que l'objet connecté transmet via le réseau de communication sans fil basse consommation, notamment des données captées par l'objet connecté, aussi nommé FRMPayload ou Frame payload dans le cas d'une trame LoRa. L'en-tête de trame FHDR comporte notamment un identifiant de l'objet connecté, tel qu'une adresse de l'objet connecté, OAD, aussi nommé DevAddr dans le cas d'une trame LoRa, un contrôleur de trame FCT, aussi nommé FCtrl dans le cas d'une trame LoRa, un compteur c, aussi nommé Counter ou FCnt dans le cas d'une trame LoRa, et des options de trames FOpts. Le compteur c est notamment un compteur permettant à un dispositif de communication recevant la trame t de détecter la perte de trames. Certaines normes de transmission sur réseau de communication sans fil basse consommation, telles que la norme LoRaWAN, possèdent dans leur protocole un compteur (counter en anglais) qui s'auto incrémente avec l'envoi d'une nouvelle trame. Ce compteur permet en règle générale de vérifier si des trames ont été perdues lors de la transmission vers le serveur. Dans un mode de réalisation, ce compteur c peut en outre être utilisé comme le compteur de l'invention, c'est-à-dire comme une des deux singularités permettant à un dispositif de communication recevant les trames de détecter une trame réémise. Aucune norme ne prévoit que le compteur de détection de perte de trames puisse être utilisé pour valider le fait qu'une trame comportant une valeur déjà utilisée est dépassée et donc invalide. Notamment le compteur de détection de perte de trames n'est pas utilisé pour vérifier l'ordre des trames reçus parce que :
1°) ce compteur de détection de perte de trames n'est pas nécessairement stocké de manière persistante sur l'objet connecté déclenchant un redémarrage du compteur à zéro lors de la réactivation de l'objet connecté après une mise hors tension.
2°) ce compteur est codé généralement sur un petit nombre de bits : 16 bits ce qui entraine, pour un objet connecté ayant une période d'émission courte (toutes les 5 minutes par exemple), que le compteur aura effectué un cycle complet en à peine 7 mois. Si le compteur s'incrémente indéfiniment en fonction de la trame, une trame pourrait être détectée réémise en comparant sa valeur à la précédente, la trame reçue n'étant pas valide (car considérée comme réémise) que si le compteur est supérieur strictement au compteur de la trame reçue précédente. Le compteur se réinitialisant régulièrement (mise hors tension, cycle compteur court), un indice supplémentaire permet de pallier à ces réinitialisations du compteur pour détection la réémission d'une trame. La deuxième singularité permettant au dispositif de communication recevant les trames de détecter une trame réémise est un indice supplémentaire.

La figure 5b illustre un premier exemple d'intégration de l'indice supplémentaire dans la trame à émettre unique selon l'invention. Dans ce premier exemple, l'en-tête de trame comporte outre le compteur c, l'indice supplémentaire is.

La figure 5c illustre un deuxième exemple d'intégration de l'indice supplémentaire dans la trame à émettre unique selon l'invention. Dans ce deuxième exemple, l'indice supplémentaire est intégré dans le bloc de données utiles de la trame FDU avec les données utiles *du.* Ainsi, lorsque l'objet connecté crypte le bloc de données utiles FDU, non seulement les données utiles du mais aussi l'indice supplémentaire is est crypté réduisant la possibilité pour un tiers malveillant de modifier l'indice supplémentaire is avant de réémettre la trame.

Ainsi les figures 5a à 5c illustrent une trame unique t selon l'invention. Cette trame unique t est générée par un objet connecté OC et transmise sur un réseau de communication sans fil basse consommation WLPN. La trame unique t identifiant l'objet connecté émetteur OAD et comportant, outre les données utiles du :
- un compteur c incrémenté en fonction de la trame, le compteur ayant une dimension prédéfinie ; et
- un indice supplémentaire is modifié lors d'une mise à zéro du compteur.

En particulier, le compteur c est inscrit sur 2 octets de cette trame comme le compteur permettant la détection de perte de trames de la norme LoRa.

La figure 5d illustre une réponse à une requête de connexion, notamment selon la norme LoRa. Lors de l'initialisation d'un objet connecté OC, c'est-à-dire lors de sa mise sous tension, l'objet connecté OC demande une connexion jn avec un serveur réseau NS, cette demande de connexion est nommée JOIN dans la norme LoRa. Elle permet à l'objet connecté OC de s'authentifier auprès du serveur réseau NS. Le serveur réseau NS répond notamment pour accepter la connexion, par exemple sous la forme d'un Join Accept selon la norme LoRa, en renvoyant différentes informations notamment sous la forme de la réponse jn_answ illustré par la figure 5d.

En particulier, les informations renvoyées permettent de générer une ou plusieurs clés de cryptage telles qu'une clé de cryptage réseau, aussi nommée NwsKey par certaines normes de transmission sur réseau de communication sans fil basse consommation, (c'est-à-dire une clé de cryptage de transmission permettant au serveur recevant la trame de la décrypter), et/ou une clé de cryptage applicative, aussi nommée AppsKey par certaines normes de transmission sur réseau de communication sans fil basse consommation, (c'est à dire une clé de cryptage permettant au traitement ou service utilisant les données utiles transportées par la trame de les décrypter).

En particulier, le message de réponse jn_answ comporte une valeur aléatoire *v=rnd()* constituant un paramètre AN de génération d'au moins une clé de cryptage (par exemple la clé de cryptage réseau et/ou la clé de cryptage applicative), ce paramètre AN est aussi nommé AppNonce dans le cas d'un message LoRa. Ce paramètre AN est différent à chaque nouvelle connexion. Le compteur est remis à zéro tout en étant prémunis d'une répétabilité car la(les) clé(s) de cryptage diffère(nt) à chaque nouvelle souscription (Join Request). Cette réponse jn_answ comporte en outre, notamment, un identifiant réseau Nid, aussi nommé NetID dans le cas d'un message LoRa, et/ou un identifiant de l'objet connecté OAD, aussi nommé DevAddr dans le cas d'un message LoRa, et/ou des paramètres de transmission DLS, aussi nommé DLSettings dans le cas d'un message LoRa, et/ou un retard de réception RxΔ, aussi nommé RxDelay dans le cas d'un message LoRa, et/ou une liste de fréquence additionnelles de transmission CFL, aussi nommé CFList dans le cas d'un message LoRa. Ce paramètre de génération de clé de cryptage AN peut être utilisé par l'invention pour initialiser l'indice supplémentaire *is* lors de l'initialisation de l'objet connecté ou de la réinitialisation de la connexion. On dit alors que la valeur du paramètre de génération de clé de cryptage utilisé comme indice supplémentaire permet de « saler » les trames envoyées. Pour permettre une détection de trames réémises coté réception, des traitements sont effectuées coté objet connecté OC pour notamment intégrer un compteur et un indice supplémentaire dans les trames à émettre.

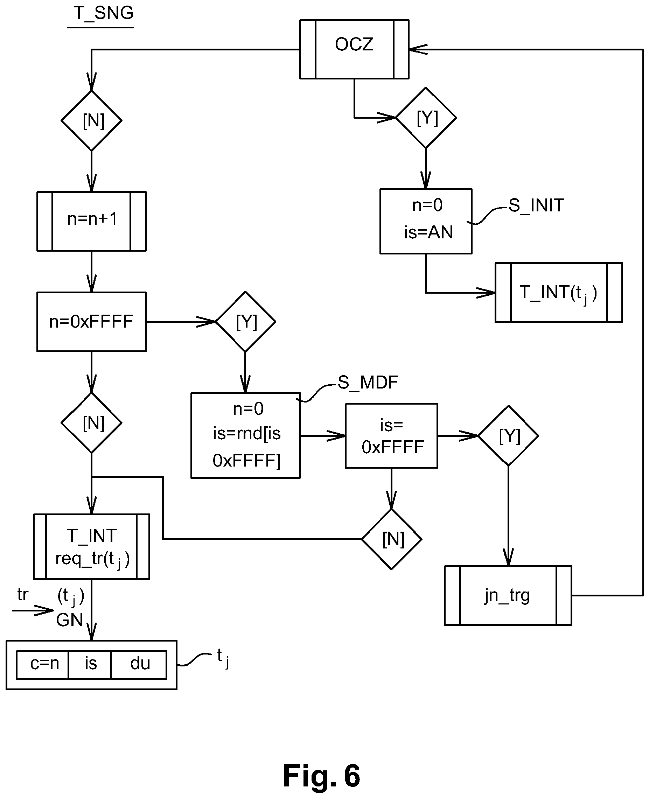

La figure 6 illustre un schéma simplifié d'un organigramme d'un procédé de singularisation de trames à émettre T_SNG selon l'invention mettant en oeuvre ces traitements coté objet connecté OC. Le procédé de singularisation T_SNG comporte une initialisation des singularités S_INIT déclenchée par l'initialisation de l'objet connecté OCZ [Y]. Les singularités comportent, en particulier, le compteur c et l'indice supplémentaire *is* selon l'invention. Notamment, l'initialisation des singularités S_INIT comporte la mise à zéro du compteur c (si n est la valeur du compteur c, n=0) et l'initialisation de l'indice supplémentaire *is* à une valeur aléatoire notamment la valeur d'un paramètre de génération de clé de cryptage AN fournie par le serveur dans sa réponse à la demande de connexion (is=AN). Le procédé de singularisation T_SNG intègre T_INT(tⱼ) ce compteur c=0 et l'indice supplémentaire is=AN dans la trame à émettre tⱼ permettant de générer une trame unique qui sera émise sur le réseau de communication sans fil basse consommation. Lorsque la trame n'est pas la première trame émise sur une connexion, c'est à dire qu'elle n'intervient pas [N] directement après l'initialisation de l'objet connecté OCZ, le procédé de singularisation T_SNG comporte une incrémentation du compteur c à la valeur n=n+1 puis une vérification de la valeur du compteur par rapport à une valeur borne fixé par la dimension du compteur dans la trame (n=0xFFFF lorsque le compteur est codé sur 2 octets). Si la valeur n du compteur n'atteint pas la borne [N], le procédé de singularisation T_SNG intègre T_INT la nouvelle valeur n du compteur c et l'indice supplémentaire is (de valeur identique à l'indice supplémentaire de la trame précédente) dans la trame en cours de génération permettant de générer une trame unique qui sera émise sur le réseau de communication sans fil basse consommation. En particulier, le procédé de singularisation comporte une émission d'une requête de transmission req_tr(tⱼ) de la trame unique ainsi généré au transmetteur sans fil basse consommation de l'objet connecté OC. La trame unique générée tⱼ est transmise vers la passerelle tr_{→GW}(tⱼ). Elle comporte le compteur *c=n,* l'indice supplémentaire is et les données utiles *du.* Si la valeur n du compteur atteint la borne [Y], le procédé de singularisation T_SNG comporte une modification des singularités S_MDF. La modification des singularités comporte en particulier, une mise à zéro de la valeur n du compteur c : n=0. La mise à zéro du compteur c déclenche notamment une modification de l'indice supplémentaire is, par exemple selon une fonction monotone (telle qu'une fonction croissante). La figure 6 illustre une modification de l'indice supplémentaire selon une fonction aléatoire croissante : is=rnd[is, 0xFFFFFF], pour un indice supplémentaire codé sur 3 octets. Alors, la nouvelle valeur de l'indice supplémentaire, différente de sa valeur actuelle, est une valeur aléatoire comprise entre la valeur actuelle de l'indice supplémentaire et une valeur borne de l'indice supplémentaire fixée notamment par la dimension du bloc de données sur lequel est codé l'indice supplémentaire dans la trame. Si la nouvelle valeur de l'indice supplémentaire is n'atteint pas la borne is=0xFFFFFF [N], alors le procédé de singularisation T_SNG intègre T_INT la nouvelle valeur n du compteur c (n=0) et l'indice supplémentaire is (de valeur modifié par rapport à l'indice supplémentaire de la trame précédente) dans la trame en cours de génération permettant de générer une trame unique qui sera émise sur le réseau de communication sans fil basse consommation. En particulier, le procédé de singularisation comporte une émission d'une requête de transmission req_tr(tⱼ) de la trame unique ainsi généré au transmetteur sans fil basse consommation de l'objet connecté OC. La trame unique générée tⱼ est transmise vers la passerelle tr_{→GW}(tⱼ). Elle comporte le compte *c=n,* l'indice supplémentaire is et les données utiles *du.* Si la nouvelle valeur de l'indice supplémentaire is atteint la borne is=0xFFFFFF [Y], alors le procédé de singularisation T_SNG déclenche une nouvelle connexion jn_trg : OCZ. Les données utiles de la trame à émettre en cours de traitement seront transmis sur cette nouvelle connexion pour laquelle les singularités auront été réinitialisées S_INIT, donc la trame unique émise sur cette nouvelle connexion comportera en plus des données utiles du, le compteur c à une valeur n=0 et un indice supplémentaire à une valeur initiale correspondant à un nouveau paramètre de génération de clé de cryptage is=AN. Si l'objet connecté a été redémarré OCZ, il envoie une demande de connexion *jn,* puis récupère une valeur aléatoire notamment dans un paramètre de génération de clé de cryptage AN, tel que le bloc AppNonce d'un message d'acception de connexion selon la norme LoRa. L'objet connecté initialise ensuite les singularités, notamment en mettant le compteur c à une valeur n égale à zéro : n=0, et en donnant à l'indice supplémentaire la valeur aléatoire du paramètre de génération de clé de cryptage AN : is=AN. Puis l'objet connecté OC intègre ces singularités (n=0, is=AN) à la trame avant de la transmettre via le réseau de communication sans fil basse consommation. Sinon, la génération d'une nouvelle trame déclenche une incrémentation de la valeur n du compteur c : n=n+1. Si cette valeur diffère de 0xFFFF pour un compteur c codé sur 2 octets d'une trame t, alors le compteur c avec sa nouvelle valeur n=n+1 et l'indice supplémentaire is (identique à celui de la trame générée précédente) sont intégrés dans la nouvelle trame avant que l'objet connecté la transmette via le réseau de communication sans fil basse consommation. Sinon, la valeur n du compteur c est remis à zéro : n=0 et la valeur de l'indice supplémentaire is modifiée, notamment l'objet connecté génère aléatoirement un indice supplémentaire compris entre la valeur de l'indice supplémentaire précédent (cette valeur étant exclue) et la valeur maximale de l'indice supplémentaire déterminée par la dimension de l'indice supplémentaire codé dans la trame, par exemple pour une indice supplémentaire codé sur 3 octets : une valeur maximale d'indice supplémentaire de 0xFFFFFF. Si le nouvel indice supplémentaire atteint la valeur maximale, alors l'objet connecté demande une nouvelle connexion jn (on peut dire de manière abusive qu'il effectue un nouveau Join dans le cas de la norme LoRa), puis les singularités réinitialisées (n=0, is=AN') sont intégrées à la trame avant d'être transmise. Sinon, l'objet connecté intègre le compteur remis à zéro n=0 et l'indice supplémentaire avec sa nouvelle valeur is=rnd [is,0xFFFFFF] dans la trame avant de la transmettre .

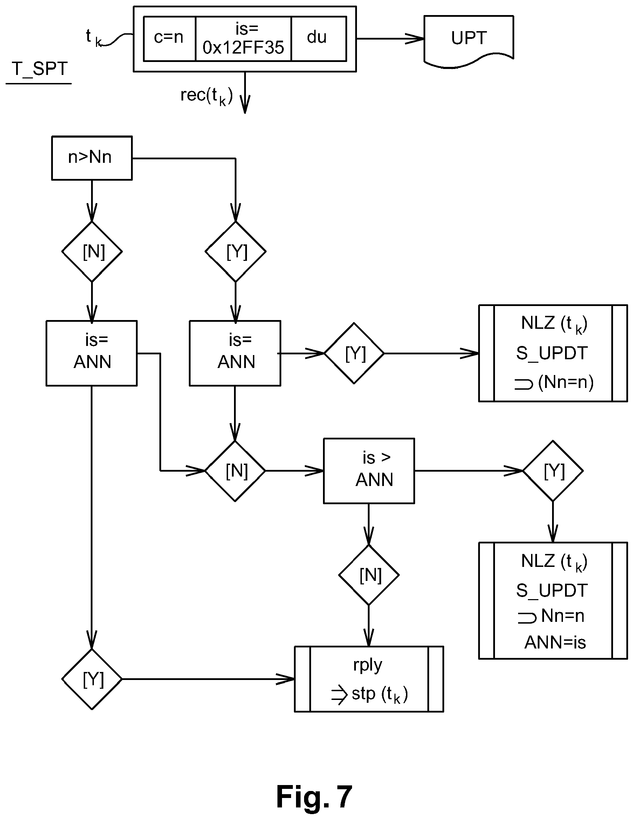

La figure 7 illustre un schéma simplifié d'un organigramme d'un procédé de blocage de trames réémises selon l'invention. Il décrit de manière plus générale un échange de trame via un réseau de communication sans fil basse consommation, notamment un échange de trame LoRa. Le procédé de blocage T_STP reçoit des trames tk reçues rec(tₖ) par un dispositif de communication, notamment une passerelle ou Gateway en anglais, et comportant notamment un compteur c à une valeur n, un indice supplémentaire is ( à une valeur 0x12FF35 sur l'exemple de la figure 7), et des données utiles (ou Payload en anglais). L'émission de la trame tk entraine la mise à jour de variables UPT dans l'objet connecté OC (modification des singularités S_MDF en particulier incrémentation du compteur n=n+1). Le procédé de blocage vérifie la valeur n du compteur c reçu par rapport à la valeur compteur de la trame reçue précédente Nn : n>Nn. Si la valeur du compteur c reçu est supérieure à la valeur compteur de la trame reçue précédente n>Nn [Y] alors le procédé de blocage vérifie la valeur de l'indice supplémentaire is reçu par rapport à une valeur d'indice supplémentaire de la trame reçue précédente ANN :is = ANN. Si ces deux valeurs d'indice supplémentaire sont identiques is=ANN [Y], le procédé de blocage de trames transmet la trame reçue notamment à l'analyse de trame NLZ(tk). Afin d'accéder plus facilement aux singularités de la trame pour la mise en oeuvre du procédé de blocage, celles-ci peuvent être mémorisés dans le dispositif de communication comme singularités réseau : le compteur réseau constitue le compteur de la trame précédente reçue et l'indice supplémentaire réseau l'indice supplémentaire de la trame reçue précédente. Dans ce cas, si ces deux valeurs d'indice supplémentaire sont identiques is=ANN [Y], après la transmission par le procédé de blocage de la trame reçue, le procédé de blocage T_STP met à jour les valeurs des singularités mémorisées par le dispositif de communication UP S_UPDT, en l'occurrence le compteur réseau Nn prend la valeur n du compteur reçu c : Nn=n. La détection d'une valeur de compteur supérieur à celle de la trame précédente et d'un indice supplémentaire identique montre que la trame reçue a bien été émise après la trame reçue précédente. Cette détection d'émission postérieure à la trame reçue précédente est utilisée pour déterminer que la trame reçue n'est pas une trame réémise. Par contre, si les deux valeurs d'indice supplémentaire ne sont pas identiques is=ANN [N], le procédé de blocage de trames vérifie la valeur relative des deux indices supplémentaires par rapport à la fonction monotone utilisée pour modifier l'indice supplémentaire par l'objet connecté. Par exemple, lorsque la fonction monotone est une fonction croissante, le procédé de blocage de trames vérifie si l'indice supplémentaire reçu is est supérieur à l'indice supplémentaire de la trame précédente ANN. Si c'est le cas [Y], le procédé de blocage de trames transmet la trame reçue notamment à l'analyse de trame NLZ(tk). Dans le cas où les singularités de la trame reçue précédente sont mémorisées dans des singularités réseau, après la transmission par le procédé de blocage de la trame reçue, le procédé de blocage T_STP met à jour les valeurs des singularités mémorisées par le dispositif de communication UP S_UPDT, en l'occurrence le compteur réseau Nn prend la valeur n du compteur reçu c : Nn=n, et l'indice supplémentaire réseau ANN l'indice supplémentaire reçu is : ANN=is. La détection d'une valeur de compteur supérieur à celle de la trame précédente et d'un indice supplémentaire identique respectant la fonction monotone montre que la trame reçue a bien été émise après la trame reçue précédente. Cette détection d'émission postérieure à la trame reçue précédente est utilisée pour déterminer que la trame reçue n'est pas une trame réémise. Si la valeur relative des deux indices supplémentaires ne respecte pas la fonction monotone utilisé pour modifier l'indice supplémentaire par l'objet connecté, dans l'exemple de la figure 7 : is >ANN [N], alors le procédé de blocage de trames T_STP détecte une réémission rply=[Y] et bloque la trame considérée réémise stp(tk), c'est-à-dire ne transmet pas la trame reçue. La détection d'une valeur de compteur supérieur à celle de la trame précédente et d'un indice supplémentaire différent ne respectant pas la fonction monotone montre que la trame reçue a été émise avec un lot de trames correspondant à l'indice supplémentaire de la trame reçue envoyées préalablement à la trame reçue précédente et donc réémise par un dispositif de communication tiers ultérieurement à cette première émission. Cette détection d'émission antérieure à la trame reçue précédente est utilisée pour déterminer que la trame reçue est une trame réémise. Si la valeur du compteur c reçu n'est pas supérieure à la valeur compteur de la trame reçue précédente n>Nn [N] alors le procédé de blocage vérifie la valeur de l'indice supplémentaire is reçu par rapport à une valeur d'indice supplémentaire de la trame reçue précédente ANN :is = ANN. Si ces deux valeurs d'indice supplémentaire sont identiques is=ANN [Y], le procédé de blocage de trames bloque la trame reçue stp(tk) car il détecte une réémission rply= [Y]. Par contre, si les deux valeurs d'indice supplémentaire ne sont pas identiques is=ANN [N], le procédé de blocage de trames vérifie la valeur relative des deux indices supplémentaires par rapport à la fonction monotone utilisé pour modifier l'indice supplémentaire par l'objet connecté. Si la valeur relative des deux indices supplémentaires ne respecte pas la fonction monotone utilisée pour modifier l'indice supplémentaire par l'objet connecté, dans l'exemple de la figure 7 : is >ANN [N], alors le procédé de blocage de trames T_STP détecte une réémission rply=[Y] et bloque la trame considérée réémise stp(tk), c'est-à-dire ne transmet pas la trame reçue. Si c'est le cas [Y], le procédé de blocage de trames transmet la trame reçue notamment à l'analyse de trame NLZ(tk). Dans le cas où les singularités de la trame reçue précédente sont mémorisées dans des singularités réseau, après la transmission par le procédé de blocage de la trame reçue, le procédé de blocage T_STP met à jour les valeurs des singularités mémorisées par le dispositif de communication UP S_UPDT, en l'occurrence le compteur réseau Nn prend la valeur n du compteur reçu c : Nn=n, et l'indice supplémentaire réseau ANN l'indice supplémentaire reçu is : ANN=is. En effet, la détection d'un compteur inférieur à celui de la trame précédente indique soit une réémission d'une trame émise préalablement à la trame reçue précédente (qui sert de référence) du même cycle du compteur lorsque l'indice supplémentaire est identique soit la réception d'une trame d'un autre cycle du compteur, il faut alors vérifier s'il s'agit d'un cycle suivant le cycle de la trame reçue précédente ou d'un cycle précédent le cycle de la trame reçue précédente (dans ce deuxième cas, il y aura alors aussi eu réémission).

Considérons que l'objet connecté OC envoie une nième trame. Cette nième trame comporte en plus des données utiles du, aussi appelé Payload en anglais, un compteur c de valeur n et un indice supplémentaire is. Ces deux variables sont, par exemple, stockées coté réception, notamment dans le serveur réseau ou dans la passerelle lorsque le blocage de trames est mis en oeuvre par la passerelle, notamment sous la forme d'un compteur réseau Nn et d'un indice supplémentaire réseau ANN. La première variable Nn correspond à la dernière valeur de compteur n reçue de l'objet connecté OC et traitée par le serveur NS, c'est-à-dire au compteur de la trame reçue précédente. La deuxième variable correspond à la valeur d'indice supplémentaire de l'objet connecté OC. Si n < Nn, c'est-à-dire que le compteur de la trame reçue est inférieur au compteur réseau correspondant au compteur de la trame reçue précédente, et is = ANN, c'est-à-dire que l'indice supplémentaire de la trame reçue est identique à l'indice supplémentaire réseau correspondant à l'indice supplémentaire de la trame reçue précédente, alors la trame reçue est détectée comme réémise. Elle est alors rejetée par respectivement le serveur ou la passerelle et ne sera donc pas traitée par le serveur (c'est ni analysée, ni stockée). Si n > Nn, c'est-à-dire que le compteur de la trame reçue est supérieur au compteur réseau correspondant au compteur de la trame reçue précédente, et is < ANN, c'est-à-dire que l'indice supplémentaire de la trame reçue est inférieur (dans le cas d'un indice supplémentaire variant selon une fonction croissante) à l'indice supplémentaire réseau correspondant à l'indice supplémentaire de la trame reçue précédente, alors la trame reçue est, là aussi, détectée comme réémise. Elle est alors rejetée par respectivement le serveur ou la passerelle et ne sera donc pas traitée par le serveur (c'est-à-dire ni analysée, ni stockée). Si n > Nn, c'est-à-dire que le compteur de la trame reçue est supérieur au compteur réseau correspondant au compteur de la trame reçue précédente, et is = ANN, c'est-à-dire que l'indice supplémentaire de la trame reçue est identique à l'indice supplémentaire réseau correspondant à l'indice supplémentaire de la trame reçue précédente, alors la trame reçue est détectée correcte. Elle peut alors être transmise par respectivement le serveur ou la passerelle au traitement(s) ultérieur(s) du serveur (c'est-à-dire analysée et/ou stockée). Alors, le compteur réseau est mis, le cas échéant, à jour avec la valeur de compteur de la trame reçue : Nn=n. Si n > Nn, c'est-à-dire que le compteur de la trame reçue est supérieur au compteur réseau correspondant au compteur de la trame reçue précédente, et is > ANN, c'est-à-dire que l'indice supplémentaire de la trame reçue est supérieur (dans le cas d'un indice supplémentaire variant selon une fonction croissante) à l'indice supplémentaire réseau correspondant à l'indice supplémentaire de la trame reçue précédente, alors la trame reçue est détectée correcte. Elle peut alors être transmise par respectivement le serveur ou la passerelle au traitement(s) ultérieur(s) du serveur (c'est-à-dire analysée et/ou stockée). Alors, les singularités réseau sont, le cas échéant, mises à jour :
- le compteur réseau est mis à jour avec la valeur de compteur de la trame reçue : Nn= ; et
- l'indice supplémentaire réseau avec la valeur de l'indice supplémentaire de la trame reçue : ANN= is.

L'invention permet 'd'éviter au serveur de traiter des trames déjà reçues, voire à la passerelle de relayer vers la passerelle des trames déjà envoyées. Ainsi, l'invention empêche les nuisances liées à l'intégrité des données.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur. D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet. Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessus. Un composant matériel correspond à tout élément d'un ensemble matériel (ou hardware) apte à mettre en oeuvre une fonction ou un ensemble de fonctions.

## Revendications

1. Procédé de singularisation des trames à émettre par un objet connecté à un serveur via un réseau de communication sans fil basse consommation, le procédé de singularisation comporte une intégration, dans une trame à émettre identifiant l'objet connecté émetteur et comportant des données utiles, d'au moins :
• un compteur apte à être incrémenté en fonction de la trame à émettre, le compteur ayant une dimension prédéfinie ; et
• un indice supplémentaire modifiable lors d'une mise à zéro du compteur.

2. Procédé de singularisation selon la revendication précédente, **caractérisé en ce que**, la première valeur de l'indice supplémentaire dans la première trame à émettre par l'objet après la connexion de l'objet avec un serveur est une valeur parmi les suivantes :
• une valeur résultant d'une fonction aléatoire ;
• une valeur résultant d'une fonction aléatoire reçue par l'objet en provenance du serveur en réponse à une demande de connexion de l'objet au serveur.
• une valeur d'un paramètre de génération d'au moins une clé de cryptage des données utiles à transmettre résultant d'une fonction aléatoire et reçue par l'objet en provenance du serveur.

3. Procédé de singularisation selon l'une quelconque des revendications précédentes, **caractérisé en ce que** l'indice supplémentaire résulte d'une fonction monotone.

4. Procédé de singularisation selon l'une quelconque des revendications précédentes, **caractérisé en ce que** le procédé de singularisation comporte une modification de l'indice supplémentaire déclenchée par une mise à zéro du compteur : la valeur de l'indice supplémentaire est égale à une valeur prise aléatoirement entre une valeur précédente de l'indice supplémentaire et la valeur borne de l'indice supplémentaire.

5. Procédé de singularisation selon l'une quelconque des revendications précédentes, **caractérisé en ce que** le procédé de singularisation déclenche une nouvelle requête de connexion de l'objet connecté à destination du serveur lorsque l'indice supplémentaire atteint la valeur borne.

6. Procédé de génération de trames à émettre uniques par un objet connecté un serveur via un réseau de communication sans fil basse consommation, le procédé de génération comporte :
• une distribution des données utiles en trames à émettre identifiant l'objet connecté émetteur, et
• une intégration dans une trame à émettre d'au moins :
- un compteur apte à être incrémenté en fonction de la trame à émettre, le compteur ayant une dimension prédéfinie ; et
- un indice supplémentaire modifiable lors d'une mise à zéro du compteur.

7. Procédé de génération de trames à émettre uniques selon la revendication précédente **caractérisé en ce que** le compteur est intégré dans un en-tête de trame.

8. Procédé de génération de trames à émettre uniques selon l'une quelconque des revendications 6 ou 7, **caractérisé en ce que** l'indice supplémentaire est intégré dans un des éléments suivants de la trame :
• un en-tête de trame ;
• une partie utile de la trame comportant les données utiles.

9. Procédé de génération de trames à émettre uniques selon l'une quelconque des revendications 6 à 8, **caractérisé en ce que** le procédé de génération de trames à émettre uniques comporte un cryptage d'une partie utile de la trame comportant les données utiles.

10. Procédé de blocage de trames réémises reçues par un dispositif de communication connecté à au moins un objet connecté en provenance d'un objet connecté via un réseau de communication sans fil basse consommation, le procédé de blocage de trames réémises comporte une détection des trames réémises parmi les trames reçues par le dispositif de communication en provenance d'un objet connecté identifié dans la trame reçue via le réseau de communication sans fil basse consommation par comparaison du compteur et de l'indice supplémentaire d'une trame reçue avec respectivement le compteur et l'indice supplémentaire d'une trame reçue précédente en provenance du même objet connecté.

11. Procédé de blocage de trames réémises selon la revendication précédente **caractérisé en ce que** la détection de trames réémises est positive lorsque :
• le compteur de la trame reçue est inférieur ou égal au compteur de la trame reçue précédente et que l'indice supplémentaire est égal à ou a une valeur relative à l'indice supplémentaire de la trame précédente correspondant à une fonction inverse à la fonction monotone utilisée pour singulariser les trames à émettre;
• le compteur de la trame reçue est supérieur au compteur de la trame reçue précédente et que l'indice supplémentaire a une valeur relative à l'indice supplémentaire de la trame précédente correspondant à une fonction inverse à la fonction monotone utilisée pour singulariser les trames à émettre.

12. Procédé de blocage de trames réémises selon l'une quelconque des revendications 10 ou 11 **caractérisé en ce que**, à l'issue de la détection, lorsqu'une réémission n'a pas été détectée, le compteur de la trame reçue et, lorsque l'indice supplémentaire diffère de celui de la trame précédemment reçue selon une fonction monotone de même ordre que celle utilisée pour singulariser les trames à émettre, l'indice supplémentaire sont stockés dans le dispositif de communication mettant en oeuvre le procédé de blocage de trames réémises.

13. Procédé de traitement des trames reçues par un dispositif de communication connecté à au moins un objet connecté via un réseau de communication sans fil basse consommation, le procédé de traitement des trames reçues comporte une détection des trames réémises parmi les trames reçues par le dispositif de communication en provenance d'un objet connecté identifié dans la trame reçue via le réseau de communication sans fil basse consommation par comparaison du compteur et de l'indice supplémentaire d'une trame reçue avec respectivement le compteur et l'indice supplémentaire d'une trame reçue précédente en provenance du même objet connecté, la détection transmettant à l'analyse du procédé de traitement des trames reçues les trames pour lesquelles une réémission n'a pas été détectée.

14. Programme comprenant des instructions de code de programme pour l'exécution des étapes du procédé de singularisation des trames à émettre selon l'une quelconque des revendications 1 à 5 ou du procédé de génération de trames à émettre uniques selon l'une quelconque des revendications 6 à 9 ou du procédé de blocage de trames réémises selon l'une quelconque des revendications 10 à 12 ou du procédé de traitement de trames reçues selon la revendication précédente lorsque ledit programme est exécuté par un processeur.

15. Générateur de trames à émettre uniques par un objet connecté à un serveur via un réseau de communication sans fil basse consommation, le générateur comporte :
• un distributeur des données utiles en trames à émettre identifiant l'objet connecté émetteur, et
• un intégrateur dans une trame à émettre d'au moins :
- un compteur apte à être incrémenté en fonction de la trame à émettre, le compteur ayant une dimension prédéfinie ; et
- un indice supplémentaire modifiable lors d'une mise à zéro du compteur.

16. Objet connecté à un serveur via un réseau de communication sans fil basse consommation, l'objet connecté comportant un générateur de trames à émettre uniques comportant :
• un distributeur des données utiles en trames à émettre identifiant l'objet connecté émetteur, et
• un intégrateur dans une trame à émettre d'au moins :
- un compteur apte à être incrémenté en fonction de la trame à émettre, le compteur ayant une dimension prédéfinie ; et
- un indice supplémentaire modifiable lors d'une mise à zéro du compteur.

17. Filtre bloque trames réémises recevant des trames en provenance d'un objet connecté via un réseau de communication sans fil basse consommation, le filtre bloque trames réémises comporte un détecteur des trames réémises parmi les trames reçues en provenance d'un objet connecté identifié dans la trame reçue via le réseau de communication sans fil basse consommation par comparaison du compteur et de l'indice supplémentaire d'une trame reçue avec respectivement le compteur et l'indice supplémentaire d'une trame reçue précédente en provenance du même objet connecté.

18. Passerelle d'un réseau de communication sans fil basse consommation recevant des trames en provenance d'un objet connecté à destination d'un serveur connecté à un réseau Internet, le serveur comportant un analyseur des données utiles des trames reçues, la passerelle comportant un filtre bloque trames réémises, le filtre étant placé en amont de l'analyseur et comportant un détecteur des trames réémises parmi les trames reçues par la passerelle en provenance d'un objet connecté identifié dans la trame reçue via le réseau de communication sans fil basse consommation par comparaison du compteur et de l'indice supplémentaire d'une trame reçue avec respectivement le compteur et l'indice supplémentaire d'une trame reçue précédente en provenance du même objet connecté.

19. Serveur recevant des trames en provenance d'un objet connecté via un réseau de communication sans fil basse consommation, le serveur comportant un analyseur des données utiles des trames reçues et un filtre bloque trames réémises, le filtre étant placé en amont de l'analyseur et comportant un détecteur des trames réémises parmi les trames reçues par le serveur en provenance d'un objet connecté identifié dans la trame reçue via le réseau de communication sans fil basse consommation par comparaison du compteur et de l'indice supplémentaire d'une trame reçue avec respectivement le compteur et l'indice supplémentaire d'une trame reçue précédente en provenance du même objet connecté.

20. Trame unique générée par un objet connecté et transmise sur un réseau de communication sans fil basse consommation, la trame unique identifiant l'objet connecté émetteur et comportant, outre les données utiles :
• un compteur incrémenté en fonction de la trame, le compteur ayant une dimension prédéfinie ; et
• un indice supplémentaire modifié lors d'une mise à zéro du compteur.

## Patentansprüche

1. Verfahren zur Vereinzelung der Rahmen, die von eine Objekt auszusenden sind, das über ein Drahtloskommunikationsnetzwerk mit niedrigem Verbrauch mit einem Server verbunden ist, wobei das Vereinzelungsverfahren ein Integrieren von wenigstens Folgendem in einen auszusendenden Rahmen, der das aussendende verbundene Objekt identifiziert und Nutzdaten aufweist, aufweist:
• einem Zähler, der in Abhängigkeit von dem auszusendenden Rahmen inkrementiert werden kann, wobei der Zähler eine vorgegebene Dimension aufweist; und
• einem zusätzlichen Index, der bei einem Setzen auf null des Zählers veränderbar ist.

2. Vereinzelungsverfahren nach dem vorhergehenden Anspruch, **dadurch gekennzeichnet, dass** der erste Wert des zusätzlichen Index in dem ersten Rahmen, der durch das Objekt nach der Verbindung des Objekts mit einem Server auszusenden ist, ein Wert aus den folgenden ist:
• ein Wert, der sich aus einer Zufallsfunktion ergibt;
• ein Wert, der sich aus einer Zufallsfunktion ergibt, die durch das Objekt von dem Server in Reaktion auf eine Anforderung zur Verbindung des Objekts mit dem Server empfangen wird.
• ein Wert eines Parameters zur Erzeugung wenigstens eines Schlüssels zur Verschlüsselung der zu übertragenden Nutzdaten, der sich aus einer Zufallsfunktion ergibt und durch das Objekt von dem Server empfangen wird.

3. Vereinzelungsverfahren nach einem der vorhergehenden Ansprüche, **dadurch gekennzeichnet, dass** sich der zusätzliche Index aus einer monotonen Funktion ergibt.

4. Vereinzelungsverfahren nach einem der vorhergehenden Ansprüche, **dadurch gekennzeichnet, dass** das Vereinzelungsverfahren ein Ändern des zusätzlichen Index aufweist, das durch ein Setzen auf null des Zählers ausgelöst wird: der Wert des zusätzlichen Index ist gleich einem Wert, der zufällig zwischen einem vorigen Wert des zusätzlichen Indexes und dem Grenzwert des zusätzlichen Indexes genommen wird.

5. Vereinzelungsverfahren nach einem der vorhergehenden Ansprüche, **dadurch gekennzeichnet, dass** das Vereinzelungsverfahren eine neue Anfrage zur Verbindung des verbundenen Objekts an den Server auslöst, wenn der zusätzliche Index den Grenzwert erreicht.

6. Verfahren zur Erzeugung von eindeutigen auszusendenden Rahmen durch ein Objekt, das über ein Drahtloskommunikationsnetzwerk mit niedrigem Verbrauch mit einem Server verbunden ist, wobei das Erzeugungsverfahren Folgendes aufweist:
• ein Verteilen der Nutzdaten in auszusendenden Rahmen, die das aussendende verbundene Objekt identifizieren, und
• ein Integrieren von wenigstens Folgendem in einen auszusendenden Rahmen:
einem Zähler, der in Abhängigkeit von dem auszusendenden Rahmen inkrementiert werden kann, wobei der Zähler eine vorgegebene Dimension aufweist; und
einem zusätzlichen Index, der bei einem Setzen auf null des Zählers veränderbar ist.

7. Verfahren zur Erzeugung von eindeutigen auszusendenden Rahmen nach dem vorhergehenden Anspruch, **dadurch gekennzeichnet, dass** der Zähler in einen Rahmenkopf integriert ist.

8. Verfahren zur Erzeugung von eindeutigen auszusendenden Rahmen nach einem der Ansprüche 6 oder 7, **dadurch gekennzeichnet, dass** der zusätzliche Index in eins der folgenden Elemente des Rahmens integriert ist:
• einen Rahmenkopf;
• einen Nutzabschnitt des Rahmens, der die Nutzdaten enthält.

9. Verfahren zur Erzeugung von eindeutigen auszusendenden Rahmen nach einem der Ansprüche 6 bis 8, **dadurch gekennzeichnet, dass** das Verfahren zur Erzeugung von eindeutigen auszusendenden Rahmen ein Verschlüsseln eines Nutzabschnitts des Rahmens aufweist, der die Nutzdaten aufweist.

10. Verfahren zur Blockierung von erneut ausgesendeten Rahmen, die durch eine Kommunikationsvorrichtung, die mit wenigstens einem verbundenen Objekt verbunden ist, von einem Objekt empfangen werden, das über ein Drahtloskommunikationsnetzwerk mit niedrigem Verbrauch verbunden ist, wobei das Verfahren zur Blockierung von erneut ausgesendeten Rahmen ein Detektieren der erneut ausgesendeten Rahmen aus den Rahmen aufweist, die durch die Kommunikationsvorrichtung von einem verbundenen Objekt empfangen werden, das in dem Rahmen, der über das Drahtloskommunikationsnetzwerk mit niedrigem Verbrauch empfangen wird, durch Vergleich des Zählers und des zusätzlichen Index eines empfangenen Rahmens mit dem Zähler bzw. dem zusätzlichen Index eines vorigen empfangenen Rahmens von demselben verbundenen Objekt identifiziert wird.

11. Verfahren zur Blockierung von erneut ausgesendeten Rahmen nach dem vorhergehenden Anspruch, **dadurch gekennzeichnet, dass** die Detektion von erneut ausgesendeten Rahmen positiv ist, wenn:
• der Zähler des empfangenen Rahmens kleiner als oder gleich dem Zähler des vorigen empfangen Rahmens ist und der zusätzliche Index gleich einem Wert bezogen auf den zusätzlichen Index des vorigen Rahmens ist oder ihn aufweist, der einer Umkehrfunktion zur monotonen Funktion entspricht, die dafür genutzt wird, die auszusendenden Rahmen zu vereinzeln;
• der Zähler des empfangenen Rahmens größer als der Zähler des vorigen empfangen Rahmens ist und der zusätzliche Index einen Wert bezogen auf den zusätzlichen Index des vorigen Rahmens aufweist, der einer Umkehrfunktion zur monotonen Funktion entspricht, die dafür genutzt wird, die auszusendenden Rahmen zu vereinzeln.

12. Verfahren zur Blockierung von erneut ausgesendeten Rahmen nach einem der Ansprüche 10 oder 11, **dadurch gekennzeichnet, dass** am Ende des Detektierens, wenn eine erneute Aussendung nicht detektiert wurde, der Zähler des empfangenen Rahmens, und, wenn der zusätzliche Index von dem des zuvor empfangenen Rahmens gemäß einer monotonen Funktion gleicher Ordnung wie jene abweicht, die dafür genutzt wird, die auszusendenden Rahmen zu vereinzeln, der zusätzliche Index in der Kommunikationsvorrichtung gespeichert werden, die das Verfahren zur Blockierung von erneut ausgesendeten Rahmen einsetzt.

13. Verfahren zur Verarbeitung der Rahmen, die durch eine Kommunikationsvorrichtung empfangen werden, die mit wenigstens einem Objekt verbunden ist, das über ein Drahtloskommunikationsnetzwerk mit niedrigem Verbrauch verbunden ist, wobei das Verfahren zur Verarbeitung der erneut ausgesendeten Rahmen ein Detektieren der erneut ausgesendeten Rahmen aus den Rahmen aufweist, die durch die Kommunikationsvorrichtung von einem verbundenen Objekt empfangen werden, das in dem Rahmen, der über das Drahtloskommunikationsnetzwerk mit niedrigem Verbrauch empfangen wird, durch Vergleich des Zählers und des zusätzlichen Index eines empfangenen Rahmens mit dem Zähler bzw. dem zusätzlichen Index eines vorigen empfangenen Rahmens von demselben verbundenen Objekt identifiziert wird, wobei das Detektieren an die Analyse des Verfahrens zur Verarbeitung der empfangenen Rahmen die Rahmen überträgt, für die eine erneute Aussendung nicht detektiert wurde.

14. Programm umfassend Programmcode-Anweisungen für die Ausführung der Schritte des Verfahrens zur Vereinzelung der auszusendenden Rahmen nach einem der Ansprüche 1 bis 5 oder des Verfahrens zur Erzeugung von eindeutigen auszusendenden Rahmen nach einem der Ansprüche 6 bis 9 oder des Verfahrens zur Blockierung von erneut ausgesendeten Rahmen nach einem der Ansprüche 10 bis 12 oder des Verfahrens zur Verarbeitung von empfangenen Rahmen nach dem vorhergehenden Anspruch, wenn das Programm von einem Prozessor ausgeführt wird.

15. Erzeuger für eindeutige auszusendende Rahmen durch ein Objekt, das über ein Drahtloskommunikationsnetzwerk mit niedrigem Verbrauch mit einem Server verbunden ist, wobei der Erzeuger Folgendes aufweist:
• einen Verteiler für die Nutzdaten in auszusendenden Rahmen, die das aussendende verbundene Objekt identifizieren, und
• einen Integrator für wenigstens Folgendes in einem auszusendenden Rahmen:
einen Zähler, der in Abhängigkeit von dem auszusendenden Rahmen inkrementiert werden kann, wobei der Zähler eine vorgegebene Dimension aufweist; und
einen zusätzlichen Index, der bei einem Setzen auf null des Zählers veränderbar ist.

16. Objekt, das über ein Drahtloskommunikationsnetzwerk mit niedrigem Verbrauch mit einem Server verbunden ist, wobei das verbundene Objekt einen Erzeuger für eindeutige auszusendende Rahmen aufweist, der Folgendes aufweist:
• einen Verteiler für die Nutzdaten in auszusendenden Rahmen, die das aussendende verbundene Objekt identifizieren, und
• einen Integrator für wenigstens Folgendes in einem auszusendenden Rahmen:
einen Zähler, der in Abhängigkeit von dem auszusendenden Rahmen inkrementiert werden kann, wobei der Zähler eine vorgegebene Dimension aufweist; und
einen zusätzlichen Index, der bei einem Setzen auf null des Zählers veränderbar ist.

17. Blockierfilter für erneut ausgesendete Rahmen, der Rahmen von einem Objekt empfängt, das über ein Drahtloskommunikationsnetzwerk mit niedrigem Verbrauch verbunden ist, wobei der Blockierfilter für erneut ausgesendete Rahmen einen Detektor für die erneut ausgesendeten Rahmen aus den Rahmen aufweist, die von einem verbundenen Objekt empfangen werden, das in dem Rahmen, der über das Drahtloskommunikationsnetzwerk mit niedrigem Verbrauch empfangen wird, durch Vergleich des Zählers und des zusätzlichen Index eines empfangenen Rahmens mit dem Zähler bzw. dem zusätzlichen Index eines vorigen empfangenen Rahmens von demselben verbundenen Objekt identifiziert ist.

18. Gateway eines Drahtloskommunikationsnetzwerks mit niedrigem Verbrauch, das Rahmen von einem verbundenen Objekt an einen Server empfängt, der mit einem Internet-Netzwerk verbunden ist, wobei der Server einen Analysator für die Nutzdaten der empfangenen Rahmen aufweist, wobei das Gateway einen Blockierfilter für erneut ausgesendete Rahmen aufweist, wobei der Filter stromauf des Analysators platziert ist und einen Detektor für die erneut ausgesendeten Rahmen aus den Rahmen aufweist, die durch das Gateway von einem verbundenen Objekt empfangen werden, das in dem Rahmen, der über das Drahtloskommunikationsnetzwerk mit niedrigem Verbrauch empfangen wird, durch Vergleich des Zählers und des zusätzlichen Index eines empfangenen Rahmens mit dem Zähler bzw. dem zusätzlichen Index eines vorigen empfangenen Rahmens von demselben verbundenen Objekt identifiziert ist.

19. Server, der Rahmen von einem Objekt empfängt, das über ein Drahtloskommunikationsnetzwerk mit niedrigem Verbrauch verbunden ist, wobei der Server einen Analysator für die Nutzdaten der empfangenen Rahmen und einen Blockierfilter für erneut ausgesendete Rahmen aufweist, wobei der Filter stromauf des Analysators platziert ist und einen Detektor für die erneut ausgesendeten Rahmen aus den Rahmen aufweist, die von dem Server von einem verbundenen Objekt empfangen werden, das in dem Rahmen, der über das Drahtloskommunikationsnetzwerk mit niedrigem Verbrauch empfangen wird, durch Vergleich des Zählers und des zusätzlichen Index eines empfangenen Rahmens mit dem Zähler bzw. dem zusätzlichen Index eines vorigen empfangenen Rahmens von demselben verbundenen Objekt identifiziert ist.

20. Eindeutiger Rahmen, der von einem verbundenen Objekt erzeugt und über ein Drahtloskommunikationsnetzwerk mit niedrigem Verbrauch übertragen wird, wobei der eindeutige Rahmen das aussendende verbundene Objekt identifiziert und außer den Nutzdaten Folgendes aufweist:
• einen Zähler, der in Abhängigkeit von dem Rahmen inkrementiert wird, wobei der Zähler eine vorgegebene Dimension aufweist; und
• einen zusätzlichen Index, der bei einem Setzen auf null des Zählers verändert wird.

## Claims

1. Method for singularizing frames to be transmitted by an object connected to a server via a low-power wireless communication network, the singularization method comprises an integration, in a frame to be transmitted identifying the transmitting connected object and comprising payload data, of at least:
• a counter that can be incremented according to the frame to be transmitted, the counter having a predefined dimension; and
• a supplementary index that can be modified upon a zeroing of the counter.

2. Singularization method according to the preceding claim, **characterized in that** the first value of the supplementary index in the first frame to be transmitted by the object after the connection of the object to a server is a value from among the following:
• a value resulting from a random function;
• a value resulting from a random function received by the object from the server in response to a connection request from the object to the server;
• a parameter value of generation of at least one encryption key of the payload data to be transmitted resulting from a random function and received by the object from the server.

3. Singularization method according to either one of the preceding claims, **characterized in that** the supplementary index results from a monotonic function.

4. Singularization method according to any one of the preceding claims, **characterized in that** the singularization method comprises a modification of the supplementary index triggered by a zeroing of the counter: the value of the supplementary index is equal to a value taken randomly between a preceding value of the supplementary index and the limit value of the supplementary index.

5. Singularization method according to any one of the preceding claims, **characterized in that** the singularization method triggers a new connection request from the connected object to the server when the supplementary index reaches the limit value.

6. Method for generating unique frames to be transmitted by an object connected to a server via a low-power wireless communication network, the generation method comprising:
• a distribution of the payload data in frames to be transmitted identifying the transmitting connected object, and
• an integration in a frame to be transmitted of at least:
- a counter that can be incremented as a function of the frame to be transmitted, the counter having a predefined dimension; and
- a supplementary index that can be modified upon a zeroing of the counter.

7. Method for generating unique frames to be transmitted according to the preceding claim, **characterized in that** the counter is integrated in a frame header.

8. Method for generating unique frames to be transmitted according to either one of Claims 6 and 7, **characterized in that** the supplementary index is integrated in one of the following elements of the frame:
• a frame header;
• a payload part of the frame comprising the payload data.

9. Method for generating unique frames to be transmitted according to any one of Claims 6 to 8, **characterized in that** the method for generating unique frames to be transmitted comprises an encryption of a payload part of the frame comprising the payload data.

10. Method for blocking retransmitted frames received by a communication device connected to at least one connected object from an object connected via a low-power wireless communication network, the method for blocking retransmitted frames comprises a detection of the retransmitted frames from among the frames received by the communication device from a connected object identified in the frame received via the low-power wireless communication network by comparison of the counter and of the supplementary index of a received frame with, respectively, the counter and the supplementary index of a preceding received frame from the same connected object.

11. Method for blocking retransmitted frames according to the preceding claim, **characterized in that** the detection of retransmitted frames is positive when:
• the counter of the received frame is less than or equal to the counter of the preceding received frame and when the supplementary index is equal to or has a value relative to the supplementary index of the preceding frame corresponding to a function that is the inverse of the monotonic function used to singularize the frames to be transmitted;
• the counter of the received frame is greater than the counter of the preceding received frame and when the supplementary index has a value relative to the supplementary index of the preceding frame corresponding to a function that is the inverse of the monotonic function used to singularize the frames to be transmitted.

12. Method for blocking retransmitted frames according to either one of Claims 10 and 11, **characterized in that**, at the end of the detection, when a retransmission has not been detected, the counter of the received frame and, when the supplementary index differs from that of the frame previously received according to a monotonic function of the same order as that used to singularize the frames to be transmitted, the supplementary index are stored in the communication device implementing the method for blocking retransmitted frames.

13. Method for processing frames received by a communication device connected to at least one connected object via a low-power wireless communication network, the method for processing the received frames comprises a detection of the retransmitted frames from among the frames received by the communication device from a connected object identified in the frame received via the low-power wireless communication network by comparison of the counter and of the supplementary index of a received frame with, respectively, the counter and the supplementary index of a preceding received frame from the same connected object, the detection transmitting to the analysis of the method for processing of the received frames the frames for which a retransmission has not been detected.

14. Program comprising program code instructions for the execution of the steps of the method for singularizing frames to be transmitted according to any one of Claims 1 to 5 or of the method for generating unique frames to be transmitted according to any one of Claims 6 to 9 or of the method for blocking retransmitted frames according to any one of Claims 10 to 12 or of the method for processing received frames according to the preceding claim when said program is executed by a processor.

15. Generator of unique frames to be transmitted by a connected object to a server via a low-power wireless communication network, the generator comprises:
• a distributor of the payload data in frames to be transmitted identifying the transmitting connected object, and
• an integrator into a frame to be transmitted of at least:
- a counter that can be incremented as a function of the frame to be transmitted, the counter having a predefined dimension; and
- a supplementary index that can be modified upon a zeroing of the counter.

16. Object connected to a server via a low-power wireless communication network, the connected object comprising a generator of unique frames to be transmitted comprising:
• a distributor of the payload data in frames to be transmitted identifying the transmitting connected object, and
• an integrator in a frame to be transmitted of at least:
- a counter that can be incremented according to the frame to be transmitted, the counter having a predefined dimension; and
- a supplementary index that can be modified upon a zeroing of the counter.

17. Retransmitted frames block filter receiving frames from an object connected via a low-power wireless communication network, the retransmitted frames block filter comprises a detector of the retransmitted frames from among the frames received from a connected object identified in the frame received via the low-power wireless communication network by comparison of the counter and of the supplementary index of a received frame with, respectively, the counter and the supplementary index of a preceding received frame from the same connected object.

18. Gateway of a low-power wireless communication network receiving frames from a connected object intended for a server connected to an internet network, the server comprising an analyzer of the payload data of the received frames, the gateway comprising a retransmitted frames block filter, the filter being placed upstream of the analyzer and comprising a detector of the retransmitted frames from among the frames received by the gateway from a connected object identified in the received frame via the low-power wireless communication network by comparison of the counter and of the supplementary index of a received frame with, respectively, the counter and the supplementary index of a preceding received frame from the same connected object.

19. Server receiving frames from a connected object via a low-power wireless communication network, the server comprising an analyzer of the payload data of the received frames and a retransmitted frames block filter, the filter being placed upstream of the analyzer and comprising a detector of the retransmitted frames from among the frames received by the server from a connected object identified in the frame received via the low-power wireless communication network by comparison of the counter and of the supplementary index of a received frame with, respectively, the counter and the supplementary index of a preceding received frame from the same connected object.

20. Unique frame generated by a connected object and transmitted over a low-power wireless communication network, the unique frame identifying the transmitting connected object and comprising, in addition to the payload data:
• a counter incremented as a function of the frame, the counter having a predefined dimension; and
• a supplementary index modified upon a zeroing of the counter.
